(19) **Europäisches Patentamt**
**European Patent Office**
**Office européen des brevets**

(11) **EP 4 682 123 A1**

(12) **EUROPEAN PATENT APPLICATION**
published in accordance with Art. 153(4) EPC

(43) Date of publication:
**21.01.2026 Bulletin 2026/04**

(21) Application number: **24795676.6**

(22) Date of filing: **14.03.2024**

(51) International Patent Classification (IPC):
***C03C 10/02*** *(2006.01)*

(86) International application number:
**PCT/CN2024/081696**

(87) International publication number:
**WO 2024/222293 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.04.2023 CN 202310470742**

(71) Applicant: **CDGM Glass Co. Ltd.**
**Chengdu, Sichuan 610100 (CN)**

(72) Inventors:
• **LI, Sai**
**Chengdu, Sichuan 610100 (CN)**

• **YUAN, Baoping**
**Chengdu, Sichuan 610100 (CN)**
• **CHEN, Xuemei**
**Chengdu, Sichuan 610100 (CN)**
• **WANG, Changhong**
**Chengdu, Sichuan 610100 (CN)**
• **ZHANG, Jing**
**Chengdu, Sichuan 610100 (CN)**
• **HU, Bin**
**Chengdu, Sichuan 610100 (CN)**

(74) Representative: **Murgitroyd & Company**
**165-169 Scotland Street**
**Glasgow G5 8PL (GB)**

(54) **GLASS-CERAMIC AND GLASS-CERAMIC PRODUCT HAVING SPINEL CRYSTAL PHASE**

(57)    The present application provides a microcrystalline glass article having a spinel crystalline phase, including following components by weight percentage: $SiO_2$: 40% to 55%, $Al_2O_3$+ZnO: 26% to 45%, $Li_2O$: 0.1% to 6%, MgO: 0.1% to 6%, and $TiO_2$: 0.5% to 7%, wherein $Li_2O/TiO_2$ is in a range from 0.2 to 4.5. By means of reasonable component design, the microcrystalline glass article having a spinel crystalline phase obtained in the present application has excellent light transmittance and mechanical performance.

**EP 4 682 123 A1**

# EP 4 682 123 A1

**Description**

TECHNICAL FIELD

The present application relates to a microcrystalline glass, and particularly to a microcrystalline glass and a microcrystalline glass article having a spinel crystalline phase.

BACKGROUND

Microcrystalline glass is a polycrystalline solid material formed through controlled crystallization of glass with specific compositions. Microcrystalline glass possesses the structural characteristics and properties of both glass and ceramics, representing a novel type of inorganic non-metallic materials that is currently under development and holds broad application prospects. Microcrystalline glass exhibits excellent properties such as high mechanical strength, low thermal expansion coefficient, good corrosion resistance, high hardness, and excellent wear resistance, and can be applied in the fields such as electronics, machinery, aerospace, biomedical science.

Compared to materials such as ceramics and sapphire, microcrystalline glass having a spinel crystalline phase offers significant advantages when used in display devices or electronic devices, particularly in the front and back covers of portable electronic devices, such as mobile phones, watches, PAD, etc. The microcrystalline glass having a spinel crystalline phase has a smooth surface, which is completely dense, uniform, and resistant to contamination, and has relatively simple manufacturing processes, high production capacity, and lower costs. Compared to high-alumina glass, microcrystalline glass having a spinel crystalline phase exhibits higher mechanical strength, hardness, drop resistance, and thermal conductivity, and superior thermal stability and chemical stability.

In the prior art, the preparation of microcrystalline glass having a spinel crystalline phase often involves using $TiO_2$ as a nucleating agent. However, the valence of element Ti introduced in form of $TiO_2$ is prone to change in the glass, forming $Ti^{3+}$ ions. The $Ti^{3+}$ ions tend to remain stable in the formed crystalline phase, causing coloration (brownish-yellow) of the microcrystalline glass, thereby reducing the visible light transmittance of the microcrystalline glass. Additionally, spinel has a high refractive index (1.83), which is significantly different from that of the matrix glass. The precipitation of the spinel crystalline phase can also reduce the visible light transmittance of the microcrystalline glass. These factors limit the application of the microcrystalline glass having a spinel crystalline phase in electronic devices and display devices. Therefore, how to improve the transmittance of microcrystalline glass having a spinel crystalline phase is an urgent issue that needs to be addressed.

SUMMARY

The technical issue to be addressed by the present application is to provide a microcrystalline glass and a microcrystalline glass article having a spinel crystalline phase with excellent light transmittance and mechanical performance.

The technical solutions adopted by the present application to address the technical issue are as follows:

(1) A microcrystalline glass article having a spinel crystalline phase includes following components by weight percentage: $SiO_2$: 40% to 55%, $Al_2O_3$+ZnO: 26% to 45%, $Li_2O$: 0.1% to 6%, MgO: 0.1% to 6%, and $TiO_2$: 0.5% to 7%, wherein $Li_2O/TiO_2$ is 0.2 to 4.5.

(2) The microcrystalline glass article having the spinel crystalline phase according to (1) further includes following components by weight percentage: $P_2O_5$+$ZrO_2$: 0 to 8%; and/or $Na_2O$: 0 to 6%; and/or $B_2O_3$: 0 to 4%; and/or $K_2O$: 0 to 3%; and/or CaO+BaO+SrO: 0 to 5%; and/or $Y_2O_3$: 0 to 6%; and/or a clarifying agent: 0 to 2%.

(3) A microcrystalline glass article having a spinel crystalline phase includes following components: $SiO_2$, $Al_2O_3$, $Li_2O$, ZnO, and $TiO_2$, wherein the microcrystalline glass article with a thickness equal to or less than 1 mm has a light transmittance equal to or greater than 87.0% at a wavelength of 550 nm.

(4) A microcrystalline glass article having a spinel crystalline phase includes following components: $SiO_2$, $Al_2O_3$, $Li_2O$, ZnO, and $TiO_2$, wherein a drop resistance of the microcrystalline glass article is equal to or greater than 1200 mm.

(5) A microcrystalline glass article having a spinel crystalline phase includes following components: $SiO_2$, $Al_2O_3$, and ZnO, wherein a compressive strength of the microcrystalline glass article is equal to or greater than 400 N.

(6) A microcrystalline glass article having a spinel crystalline phase, wherein a haze of the microcrystalline glass article with a thickness equal to or less than 1 mm is equal to or less than 0.3%.

(7) A microcrystalline glass article having a spinel crystalline phase, wherein a ball drop test height of the microcrystalline glass article is equal to or greater than 1000 mm.

(8) A microcrystalline glass article having a spinel crystalline phase includes following components: $SiO_2$, $Al_2O_3$, $Li_2O$, ZnO, and $TiO_2$, wherein for light in a wavelength range from 400 nm to 800 nm, the average |B| value of the microcrystalline glass article with a thickness equal to or less than 1 mm is equal to or less than 1.0.

(9) A microcrystalline glass article having a spinel crystalline phase includes following components: $SiO_2$, $Al_2O_3$, $Li_2O$, $ZnO$, and $TiO_2$, wherein a depth of an ion exchange layer of the microcrystalline glass article is equal to or greater than 75 $\mu$m.

(10) A microcrystalline glass article having a spinel crystalline phase includes following components: $SiO_2$, $Al_2O_3$, and $Li_2O$, wherein a surface stress of the microcrystalline glass article is equal to or greater than 200 MPa.

(11) A microcrystalline glass article having a spinel crystalline phase includes following components: $SiO_2$, $Al_2O_3$, $ZnO$, and $TiO_2$, wherein a crystal grain size of the microcrystalline glass article is equal to or less than 60 nm.

(12) A microcrystalline glass article having a spinel crystalline phase, wherein a light transmittance of the microcrystalline glass article with a thickness equal to or less than 1 mm is equal to or greater than 87.0% at a wavelength of 550 nm.

(13) A microcrystalline glass article having a spinel crystalline phase includes following components: $SiO_2$, $Al_2O_3$, and $ZnO$, wherein a Vickers hardness of the microcrystalline glass article is equal to or greater than 650kgf/mm$^2$.

(14) The microcrystalline glass article having the spinel crystalline phase according to any one of (3) to (13) includes following components by weight percentage: $SiO_2$: 40% to 55%; and/or $Al_2O_3$+$ZnO$: 26% to 45%; and/or $Li_2O$: 0.1% to 6%; and/or $MgO$: 0.1% to 6%; and/or $TiO_2$: 0.5% to 7%; and/or $P_2O_5$+$ZrO_2$: 0 to 8%; and/or $Na_2O$: 0 to 6%; and/or $B_2O_3$: 0 to 4%; and/or $K_2O$: 0 to 3%; and/or $CaO$+$BaO$+$SrO$: 0 to 5%; and/or $Y_2O_3$: 0 to 6%; and/or a clarifying agent: 0 to 2%.

(15) A microcrystalline glass article having a spinel crystalline phase consists of following components by weight percentage: $SiO_2$: 40% to 55%, $Al_2O_3$+$ZnO$: 26% to 45%, $Li_2O$: 0.1% to 6%, $MgO$: 0.1% to 6%, $TiO_2$: 0.5% to 7%, $P_2O_5$+$ZrO_2$: 0 to 8%, $Na_2O$: 0 to 6%, $B_2O_3$: 0 to 4%, $K_2O$: 0 to 3%, $CaO$+$BaO$+$SrO$: 0 to 5%, $Y_2O_3$: 0 to 6%, and a clarifying agent: 0 to 2%.

(16) The microcrystalline glass article having the spinel crystalline phase according to any one of (1) to (15), wherein the components by weight percentage satisfy: $Li_2O/TiO_2$ is in a range from 0.2 to 4.5, preferably $Li_2O/TiO_2$ is in a range from 0.5 to 3.5, more preferably $Li_2O/TiO_2$ is in a range from 0.7 to 2.5, still more preferably $Li_2O/TiO_2$ is in a range from 0.75 to 1.5.

(17) The microcrystalline glass article having the spinel crystalline phase according to any one of (1) to (15), wherein the components by weight percentage satisfy: $Al_2O_3/ZnO$ is in a range from 1.0 to 3.0, preferably $Al_2O_3/ZnO$ is in a range from 1.2 to 2.8, more preferably $Al_2O_3/ZnO$ is in a range from 1.25 to 2.5, still more preferably $Al_2O_3/ZnO$ is in a range from 1.5 to 2.3.

(18) The microcrystalline glass article having the spinel crystalline phase according to any one of (1) to (15), wherein the components by weight percentage satisfy: $SiO_2/Al_2O_3$ is in a range from 1.5 to 3.2, preferably $SiO_2/Al_2O_3$ is in a range from 1.7 to 3.0, more preferably $SiO_2/Al_2O_3$ is in a range from 1.8 to 2.8, still more preferably $SiO_2/Al_2O_3$ is in a range from 2.0 to 2.5.

(19) The microcrystalline glass article having the spinel crystalline phase according to any one of (1) to (15), wherein the components by weight percentage satisfy: $(TiO_2$+$ZnO)/Al_2O_3$ is in a range from 0.4 to 1.5, preferably $(TiO_2$+$ZnO)/Al_2O_3$ is in a range from 0.5 to 1.2, more preferably $(TiO_2$+$ZnO)/Al_2O_3$ is in a range from 0.6 to 1.0, still more preferably $(TiO_2$+$ZnO)/Al_2O_3$ is in a range from 0.6 to 0.9.

(20) The microcrystalline glass article having the spinel crystalline phase according to any one of (1) to (15), wherein the components by weight percentage satisfy: $(Li_2O$+$MgO)/TiO_2$ is in a range from 0.3 to 8.0, preferably $(Li_2O$+$MgO)/TiO_2$ is in a range from 0.5 to 5.0, more preferably $(Li_2O$+$MgO)/TiO_2$ is in a range from 1.0 to 3.0, still more preferably $(Li_2O$+$MgO)/TiO_2$ is in a range from 1.2 to 2.5.

(21) The microcrystalline glass article having the spinel crystalline phase according to any one of (1) to (15), wherein the components by weight percentage satisfy: $Al_2O_3/(MgO$+$TiO_2)$ is in a range from 1.3 to 10.0, preferably $Al_2O_3/(MgO$+$TiO_2)$ is in a range from 1.5 to 8.0, more preferably $Al_2O_3/(MgO$+$TiO_2)$ is in a range from 2.5 to 6.5, still more preferably $Al_2O_3/(MgO$+$TiO_2)$ is in a range from 3.0 to 5.5.

(22) The microcrystalline glass article having the spinel crystalline phase according to any one of (1) to (15), wherein the components by weight percentage satisfy: $(Al_2O_3$+$Li_2O)/P_2O_5$ is in a range from 5.0 to 45.0, preferably $(Al_2O_3$+$Li_2O)/P_2O_5$ is in a range from 7.0 to 35.0, more preferably $(Al_2O_3$+$Li_2O)/P_2O_5$ is in a range from 8.0 to 30.0, still more preferably $(Al_2O_3$+$Li_2O)/P_2O_5$ is in a range from 10.0 to 25.0.

(23) The microcrystalline glass article having the spinel crystalline phase according to any one of (1) to (15), wherein the components by weight percentage satisfy: $P_2O_5/ZrO_2$ is in a range from 0.1 to 5.0, preferably $P_2O_5/ZrO_2$ is in a range from 0.2 to 3.0, more preferably $P_2O_5/ZrO_2$ is in a range from 0.5 to 2.0, still more preferably $P_2O_5/ZrO_2$ is in a range from 0.6 to 1.5.

(24) The microcrystalline glass article having the spinel crystalline phase according to any one of (1) to (15), wherein the components by weight percentage satisfy: $(SiO_2$+$Na_2O)/ZnO$ is in a range from 2.2 to 6.2, preferably $(SiO_2$+$Na_2O)/ZnO$ is in a range from 2.5 to 6.0, more preferably $(SiO_2$+$Na_2O)/ZnO$ is in a range from 2.8 to 5.5, still more preferably $(SiO_2$+$Na_2O)/ZnO$ is in a range from 3.0 to 5.0.

(25) The microcrystalline glass article having the spinel crystalline phase according to any one of (1) to (15), wherein the components by weight percentage satisfy: $(Na_2O+K_2O)/ZnO$ is equal to or less than 0.8, preferably $(Na_2O+K_2O)/ZnO$ is equal to or less than 0.6, more preferably $(Na_2O+K_2O)/ZnO$ is equal to or less than 0.4, still more preferably $(Na_2O+K_2O)/ZnO$ is equal to or less than 0.2.

(26) The microcrystalline glass article having the spinel crystalline phase according to any one of claims (1) to (15) includes following components by weight percentage: $SiO_2$: 45% to 53%, preferably $SiO_2$: 48% to 52%; and/or $Al_2O_3$ +ZnO: 30% to 42%, preferably $Al_2O_3$+ZnO: 32% to 42%, more preferably $Al_2O_3$+ZnO: 35% to 40%; and/or $Li_2O$: 1% to 5%, preferably $Li_2O$: 2% to 4%; and/or MgO: 1% to 5%, preferably MgO: 2% to 4%; and/or $TiO_2$: 1% to 6%, preferably $TiO_2$: 2% to 5%; and/or $P_2O_5+ZrO_2$: 0.1% to 7%, preferably $P_2O_5+ZrO_2$: 0.5% to 5%; and/or $Na_2O$: 0 to 4%, preferably $Na_2O$: 0 to 2%; and/or $B_2O_3$: 0 to 2%, preferably $B_2O_3$: 0 to 1%; and/or $K_2O$: 0 to 2%, preferably $K_2O$: 0 to 1%; and/or CaO+BaO+SrO: 0 to 4%, preferably CaO+BaO+SrO: 0 to 2%; and/or $Y_2O_3$: 0 to 4%, preferably $Y_2O_3$: 0 to 2%; and/or the clarifying agent: 0 to 1%, preferably the clarifying agent: 0 to 0.5%.

(27) The microcrystalline glass article having the spinel crystalline phase according to any one of claims (1) to (15) includes following components by weight percentage: $Al_2O_3$: 15% to 30%, preferably $Al_2O_3$: 18% to 25%, more preferably $Al_2O_3$: 20% to 23%; and/or ZnO: 9% to 20%, preferably ZnO: 11% to 18%, more preferably ZnO: 12% to 16%; and/or $P_2O_5$: 0 % to 5%, preferably 0.5% to 4%, more preferably $P_2O_5$: 1% to 3%; and/or $ZrO_2$: 0% to 5%, preferably 0.5% to 4%, more preferably $ZrO_2$: 1% to 3%.

(28) The microcrystalline glass article having the spinel crystalline phase according to any one of claims (1) to (15), wherein a weight percentage of the spinel crystalline phase in the microcrystalline glass article is in a range from 20% to 60%, preferably from 25% to 50%, more preferably from 25% to 45%, still more preferably from 30% to 45%.

(29) The microcrystalline glass article having the spinel crystalline phase according to any one of (1) to (15), wherein the microcrystalline glass article having the spinel crystalline phase includes a quartz crystalline phase; a weight percentage of the quartz crystalline phase in the microcrystalline glass article is preferably equal to or less than 20%, more preferably equal to or less than 10%, more preferably equal to or less than 5%, and still more preferably, the microcrystalline glass article having the spinel crystalline phase excludes a quartz crystalline phase.

(30) The microcrystalline glass article having the spinel crystalline phase according to any one of (1) to (14) further includes following components by weight percentage: $La_2O_3+Gd_2O_3+Yb_2O_3+Nb_2O_5+WO_3+Bi_2O_3+Ta_2O_5+TeO_2$: 0 to 5%, preferably $La_2O_3+Gd_2O_3+Yb_2O_3+Nb_2O_5+WO_3+Bi_2O_3+Ta_2O_5+TeO_2$: 0 to 2%, more preferably $La_2O_3+Gd_2O_3$ $+Yb_2O_3+Nb_2O_5+WO_3+Bi_2O_3+Ta_2O_5+TeO_2$: 0 to 1%; still more preferably the composition excludes $La_2O_3$, and/or excludes $Gd_2O_3$, and/or excludes $Yb_2O_3$, and/or excludes $Nb_2O_5$, and/or excludes $WO_3$, and/or excludes $Bi_2O_3$, and/or excludes $Ta_2O_5$, and/or excludes $TeO_2$.

(31) The microcrystalline glass article having the spinel crystalline phase according to any one of (1) to (15), wherein a crystal grain size of the microcrystalline glass article is equal to or less than 60 nm, preferably equal to or less than 45 nm, more preferably in a range from 10 nm to 30 nm; and/or a depth of an ion exchange layer of the microcrystalline glass article is equal to or greater than 75 $\mu$m, preferably in a range from 80 $\mu$m to 150 $\mu$m, more preferably in a range from 100 $\mu$m to 125 $\mu$m; and/or a surface stress of the microcrystalline glass article is equal to or greater than 200 MPa, preferably 250 MPa to 400 MPa, preferably 300 MPa to 400 MPa; and/or a ball drop test height of the microcrystalline glass article is equal to or greater than 1000 mm, preferably equal to or greater than 1200 mm, more preferably equal to or greater than 1500 mm; and/or a drop resistance of the microcrystalline glass article is equal to or greater than 1200 mm, preferably equal to or greater than 1300 mm; preferably equal to or greater than 1400 mm; and/or a fracture toughness of the microcrystalline glass article is equal to or greater than 1.0 MPa·m$^{1/2}$, preferably equal to or greater than 1.2 MPa·m$^{1/2}$, more preferably in a range from 1.2 MPa·m$^{1/2}$ to 1.6 MPa·m$^{1/2}$; and/or a four-point bending strength of the microcrystalline glass article is equal to or greater than 500 MPa, preferably equal to or greater than 600 MPa, more preferably in a range from 700 MPa to 1000 MPa; and/or a compressive strength of the microcrystalline glass article is equal to or greater than 400 N, preferably in a range from 400 N to 550 N, more preferably in a range from 450 N to 550 N; and/or a Vickers hardness of the microcrystalline glass article is 650 equal to or greater than kgf/mm$^2$, preferably equal to or greater than 660 kgf/mm$^2$, preferably in a range from 680 kgf/mm$^2$ to 750 kgf/mm$^2$

(32) The microcrystalline glass article having the spinel crystalline phase according to any one of (1) to (15), wherein a haze of the microcrystalline glass article with a thickness equal to or less than 1 mm is equal to or less than 0.3%, preferably equal to or less than 0.25%, preferably in a range from 0.05% to 0.2%; and/or an average light transmittance of the microcrystalline glass article with a thickness equal to or less than 1 mm in a wavelength range from 400 nm to 800 nm is equal to or greater than 87.0%, preferably equal to or greater than 88.5%, more preferably equal to or greater than 89.5%; and/or a light transmittance of the microcrystalline glass article with a thickness equal to or less than 1 mm at a wavelength of 550 nm is equal to or greater than 87.0%, preferably equal to or greater than 88.0%, more preferably equal to or greater than 89.0%; and/or an average |B| value of the microcrystalline glass article with a thickness equal to or less than 1 mm for light in a wavelength range from 400 nm to 800 nm is equal to or less than 1.0, preferably equal to or less than 0.8, more preferably in a range from 0.3 to 0.6.

(33) The microcrystalline glass article having the spinel crystalline phase according to (32), wherein the thickness of the microcrystalline glass article is in a range from 0.2 mm to 1 mm, preferably from 0.3 mm to 0.9 mm, more preferably from 0.5 mm to 0.8 mm, still more preferably 0.55 mm, 0.6 mm, 0.68 mm, 0.7 mm, or 0.75 mm.

(34) The microcrystalline glass article having the spinel crystalline phase according to any one of (1) to (14) further includes following components by weight percentage: $NiO$: 0 to 4%; and/or $Ni_2O_3$: 0 to 4%; and/or $CoO$: 0 to 2%; and/or $Co_2O_3$: 0 to 2%; and/or $Fe_2O_3$: 0 to 7%; and/or $MnO_2$: 0 to 4%; and/or $Er_2O_3$: 0 to 8%; and/or $Nd_2O_3$: 0 to 8%; and/or $Cu_2O$: 0 to 4%; and/or $Pr_2O_3$: 0 to 8%; and/or $CeO_2$: 0 to 4%.

(35) The microcrystalline glass article having the spinel crystalline phase according to any one of (1) to (14) further includes following components by weight percentage: $NiO$: 0.1% to 4%; and/or $Ni_2O_3$: 0.1% to 4%; and/or $CoO$: 0.05% to 2%; and/or $Co_2O_3$: 0.05% to 2%; and/or $Fe_2O_3$: 0.2% to 7%; and/or $MnO_2$: 0.1% to 4%; and/or $Er_2O_3$: 0.4% to 8%; and/or $Nd_2O_3$: 0.4% to 8%; and/or $Cu_2O$: 0.5% to 4%; and/or $Pr_2O_3$: 0.4% to 8%; and/or $CeO_2$: 0.5% to 4%.

(36) The microcrystalline glass article having the spinel crystalline phase according to any one of (1) to (14) further includes following components by weight percentage: $NiO$: 0.1% to 3%; and/or $Ni_2O_3$: 0.1% to 3%; and/or $CoO$: 0.05% to 1.8%; and/or $Co_2O_3$: 0.05% to 1.8%; and/or $Fe_2O_3$: 0.2% to 5%; and/or $MnO_2$: 0.1% to 3%; and/or $Er_2O_3$: 0.4% to 6%; and/or $Nd_2O_3$: 0.4% to 6%; and/or $Cu_2O$: 0.5% to 3%; and/or $Pr_2O_3$: 0.4% to 6%; and/or $CeO_2$: 0.5% to 3%.

(37) The microcrystalline glass article having the spinel crystalline phase according to any one of (1) to (14) further includes following components by weight percentage: $NiO$: 0.1% to 3%; and/or $Ni_2O_3$: 0.1% to 3%.

(38) The microcrystalline glass article having the spinel crystalline phase according to any one of (1) to (14) further includes following components by weight percentage: $CoO$: 0.05% to 1.8%; and/or $Co_2O_3$: 0.05% to 1.8%.

(39) The microcrystalline glass article having the spinel crystalline phase according to any one of (1) to (14) further includes following components by weight percentage: $Cu_2O$: 0.5% to 3%; and/or $CeO_2$: 0.5% to 3%.

(40) The microcrystalline glass article having the spinel crystalline phase according to any one of (1) to (14) further includes following components by weight percentage: $Fe_2O_3$: 0.2% to 5%, and $CoO$: 0.05% to 0.3%; or $Fe_2O_3$: 0.2% to 5%, and $Co_2O_3$: 0.05% to 0.3%; or $Fe_2O_3$: 0.2% to 5%, $CoO$: 0.05% to 0.3%, and $NiO$: 0.1% to 1%; or $Fe_2O_3$: 0.2% to 5%, $Co_2O_3$: 0.05% to 0.3%, and $NiO$: 0.1% to 1%.

(41) The microcrystalline glass article having the spinel crystalline phase according to any one of (1) to (14) further includes following components by weight percentage: $Pr_2O_3$: 0.4% to 6%; or $Fe_2O_3$: 0.2% to 5%; or $MnO_2$: 0.1% to 3%; or $Er_2O_3$: 0.4% to 6%; or $Nd_2O_3$: 0.4% to 6%.

(42) The microcrystalline glass article having the spinel crystalline phase according to any one of (1) to (14) further includes following components by weight percentage: $Er_2O_3$: 0.4% to 6%, $Nd_2O_3$: 0.4% to 4%, and $MnO_2$: 0.1% to 2%.

(43) A microcrystalline glass having a spinel crystalline phase includes following components by weight percentage: $SiO_2$: 40% to 55%, $Al_2O_3$+$ZnO$: 26% to 45%, $Li_2O$: 0.1% to 6%, $MgO$: 0.1% to 6%, and $TiO_2$: 0.5% to 7%, wherein $Li_2O/TiO_2$ is in a range from 0.2 to 4.5.

(44) The microcrystalline glass having the spinel crystalline phase according to (43) further includes following components by weight percentage: $P_2O_5$+$ZrO_2$: 0 to 8%; and/or $Na_2O$: 0 to 6%; and/or $B_2O_3$: 0 to 4%; and/or $K_2O$: 0 to 3%; and/or $CaO$+$BaO$+$SrO$: 0 to 5%; and/or $Y_2O_3$: 0 to 6%; and/or a clarifying agent: 0 to 2%.

(45) A microcrystalline glass having the spinel crystalline phase includes following components: $SiO_2$, $Al_2O_3$, $Li_2O$, $ZnO$, and $TiO_2$, wherein the microcrystalline glass with a thickness equal to or less than 1 mm has a light transmittance equal to or greater than 87.0% at a wavelength of 550 nm.

(46) A microcrystalline glass having a spinel crystalline phase, wherein a crystal grain size of the microcrystalline glass is equal to or less than 60 nm.

(47) A microcrystalline glass having a spinel crystalline phase includes following components: $SiO_2$, $Al_2O_3$, $Li_2O$, $ZnO$, and $TiO_2$, wherein a haze of the microcrystalline glass with a thickness equal to or less than 1 mm is equal to or less than 0.3%.

(48) A microcrystalline glass having a spinel crystalline phase includes following components: $SiO_2$, $Al_2O_3$, $Li_2O$, $ZnO$, and $TiO_2$, wherein a Young's modulus of the microcrystalline glass is in a range from 80 GPa to 110 Gpa.

(49) A microcrystalline glass having a spinel crystalline phase includes following components: $SiO_2$, $Al_2O_3$, $Li_2O$, and $ZnO$, wherein the microcrystalline glass with a thickness equal to or less than 1 mm has an average |B| value equal to or less than 1.0 for light in a wavelength range from 400 nm to 800 nm.

(50) A microcrystalline glass having a spinel crystalline phase includes following components: $SiO_2$, $Al_2O_3$, and $ZnO$, wherein an average light transmittance of the microcrystalline glass with a thickness equal to or less than 1 mm is equal to or greater than 87.0% in a wavelength range from 400 nm to 800 nm.

(51) The microcrystalline glass having the spinel crystalline phase according to any one of (45) to (50) includes following components by weight percentage: $SiO_2$: 40% to 55%; and/or $Al_2O_3$+$ZnO$: 26% to 45%; and/or $Li_2O$: 0.1% to 6%; and/or $MgO$: 0.1% to 6%; and/or $TiO_2$: 0.5% to 7%; and/or $P_2O_5$+$ZrO_2$: 0 to 8%; and/or $Na_2O$: 0 to 6%; and/or $B_2O_3$: 0 to 4%; and/or $K_2O$: 0 to 3%; and/or $CaO$+$BaO$+$SrO$: 0 to 5%; and/or $Y_2O_3$: 0 to 6%; and/or a clarifying agent: 0 to 2%.

(52) A microcrystalline glass having a spinel crystalline phase consists of following components by weight percentage: $SiO_2$: 40% to 55%, $Al_2O_3$+$ZnO$: 26% to 45%, $Li_2O$: 0.1% to 6%, $MgO$: 0.1% to 6%, $TiO_2$: 0.5% to 7%, $P_2O_5$+$ZrO_2$: 0 to

8%, $Na_2O$: 0 to 6%, $B_2O_3$: 0 to 4%, $K_2O$: 0 to 3%, $CaO+BaO+SrO$: 0 to 5%, $Y_2O_3$: 0 to 6%, and a clarifying agent: 0 to 2%.

(53) The microcrystalline glass having the spinel crystalline phase according to any one of (43) to (52), wherein the components by weight percentage satisfy: $Li_2O/TiO_2$ is in a range from 0.2 to 4.5, preferably $Li_2O/TiO_2$ is in a range from 0.5 to 3.5, more preferably $Li_2O/TiO_2$ is in a range from 0.7 to 2.5, still more preferably $Li_2O/TiO_2$ is in a range from 0.75 to 1.5.

(54) The microcrystalline glass having the spinel crystalline phase according to any one of (43) to (52), wherein the components by weight percentage satisfy: $Al_2O_3/ZnO$ is in a range from 1.0 to 3.0, preferably $Al_2O_3/ZnO$ is in a range from 1.2 to 2.8, more preferably $Al_2O_3/ZnO$ is in a range from 1.25 to 2.5, still more preferably $Al_2O_3/ZnO$ is in a range from 1.5 to 2.3.

(55) The microcrystalline glass having the spinel crystalline phase according to any one of (43) to (52), wherein the components by weight percentage satisfy: $SiO_2/Al_2O_3$ is in a range from 1.5 to 3.2, preferably $SiO_2/Al_2O_3$ is in a range from 1.7 to 3.0, more preferably $SiO_2/Al_2O_3$ is in a range from 1.8 to 2.8, still more preferably $SiO_2/Al_2O_3$ is in a range from 2.0 to 2.5.

(56) The microcrystalline glass having the spinel crystalline phase according to any one of (43) to (52), wherein the components by weight percentage satisfy: $(TiO_2+ZnO)/Al_2O_3$ is in a range from 0.4 to 1.5, preferably $(TiO_2+ZnO)/Al_2O_3$ is in a range from 0.5 to 1.2, more preferably $(TiO_2+ZnO)/Al_2O_3$ is in a range from 0.6 to 1.0, still more preferably $(TiO_2+ZnO)/Al_2O_3$ is in a range from 0.6 to 0.9.

(57) The microcrystalline glass having the spinel crystalline phase according to any one of (43) to (52), wherein the components by weight percentage satisfy: $(Li_2O+MgO)/TiO_2$ is in a range from 0.3 to 8.0, preferably $(Li_2O+MgO)/TiO_2$ is in a range from 0.5 to 5.0, more preferably $(Li_2O+MgO)/TiO_2$ is in a range from 1.0 to 3.0, still more preferably $(Li_2O+MgO)/TiO_2$ is in a range from 1.2 to 2.5.

(58) The microcrystalline glass having the spinel crystalline phase according to any one of (43) to (52), wherein the components by weight percentage satisfy: $Al_2O_3/(MgO+TiO_2)$ is in a range from 1.3 to 10.0, preferably $Al_2O_3/(MgO+TiO_3)$ is in a range from 1.5 to 8.0, more preferably $Al_2O_3/(MgO+TiO_3)$ is in a range from 2.5 to 6.5, still more preferably $Al_2O_3/(MgO+TiO_2)$ is in a range from 3.0 to 5.5.

(59) The microcrystalline glass having the spinel crystalline phase according to any one of (43) to (52), wherein the components by weight percentage satisfy: $(Al_2O_3+Li_2O)/P_2O_5$ is in a range from 5.0 to 45.0, preferably $(Al_2O_3+Li_2O)/P_2O_5$ is in a range from 7.0 to 35.0, more preferably $(Al_2O_3+Li_2O)/P_2O_5$ is in a range from 8.0 to 30.0, still more preferably $(Al_2O_3+Li_2O)/P_2O_5$ is in a range from 10.0 to 25.0.

(60) The microcrystalline glass having the spinel crystalline phase according to any one of (43) to (52), wherein the components by weight percentage satisfy: $P_2O_5/ZrO_2$ is in a range from 0.1 to 5.0, preferably $P_2O_5/ZrO_2$ is in a range from 0.2 to 3.0, more preferably $P_2O_5/ZrO_2$ is in a range from 0.5 to 2.0, still more preferably $P_2O_5/ZrO_2$ is in a range from 0.6 to 1.5.

(61) The microcrystalline glass having the spinel crystalline phase according to any one of (43) to (52), wherein the components by weight percentage satisfy: $(SiO_2+Na_2O)/ZnO$ is in a range from 2.2 to 6.2, preferably $(SiO_2+Na_2O)/ZnO$ is in a range from 2.5 to 6.0, preferably $(SiO_2+Na_2O)/ZnO$ is in a range from 2.8 to 5.5, more preferably $(SiO_2+Na_2O)/ZnO$ is in a range from 3.0 to 5.0.

(62) The microcrystalline glass having the spinel crystalline phase according to any one of (43) to (52), wherein the components by weight percentage satisfy: $(Na_2O+K_2O)/ZnO$ is equal to or less than 0.8, preferably $(Na_2O+K_2O)/ZnO$ is equal to or less than 0.6, more preferably $(Na_2O+K_2O)/ZnO$ is equal to or less than 0.4, still more preferably $(Na_2O+K_2O)/ZnO$ is equal to or less than 0.2.

(63) The microcrystalline glass having the spinel crystalline phase according to any one of (43) to (52) includes following components by weight percentage: $SiO_2$: 45% to 53%, preferably $SiO_2$: 48% to 52%; and/or $Al_2O_3+ZnO$: 30% to 42%, preferably $Al_2O_3+ZnO$: 32% to 42%, more preferably $Al_2O_3+ZnO$: 35% to 40%; and/or $Li_2O$: 1% to 5%, preferably $Li_2O$: 2% to 4%; and/or $MgO$: 1% to 5%, preferably $MgO$: 2% to 4%; and/or $TiO_2$: 1% to 6%, preferably $TiO_2$: 2% to 5%; and/or $P_2O_5+ZrO_2$: 0.1% to 7%, preferably $P_2O_5+ZrO_2$: 0.5% to 5%; and/or $Na_2O$: 0 to 4%, preferably $Na_2O$: 0 to 2%; and/or $B_2O_3$: 0 to 2%, preferably $B_2O_3$: 0 to 1%; and/or $K_2O$: 0 to 2%, preferably $K_2O$: 0 to 1%; and/or $CaO+BaO+SrO$: 0 to 4%, preferably $CaO+BaO+SrO$: 0 to 2%; and/or $Y_2O_3$: 0 to 4%, preferably $Y_2O_3$: 0 to 2%; and/or the clarifying agent: 0 to 1%, preferably the clarifying agent: 0 to 0.5%.

(64) The microcrystalline glass having the spinel crystalline phase according to any one of claims (43) to (52) includes following components by weight percentage: $Al_2O_3$: 15% to 30%, preferably $Al_2O_3$: 18% to 25%, more preferably $Al_2O_3$: 20% to 23%; and/or $ZnO$: 9% to 20%, preferably $ZnO$: 11% to 18%, more preferably $ZnO$: 12% to 16%; and/or $P_2O_5$: 0 % to 5%, preferably 0.5% to 4%, preferably $P_2O_5$: 1% to 3%; and/or $ZrO_2$: 0% to 5%, preferably 0.5% to 4%, preferably $ZrO_2$: 1% to 3%.

(65) The microcrystalline glass having the spinel crystalline phase according to any one of claims (43) to (52), wherein a weight percentage of the spinel crystalline phase in the microcrystalline glass is in a range from 20% to 60%, preferably from 25% to 50%, more preferably from 25% to 45%, still more preferably from 30% to 45%.

(66) The microcrystalline glass having the spinel crystalline phase according to any one of (43) to (52), wherein the microcrystalline glass having the spinel crystalline phase includes a quartz crystalline phase; a weight percentage of the quartz crystalline phase in the microcrystalline glass is preferably equal to or less than 20%, more preferably equal to or less than 10%, further more preferably equal to or less than 5%, still more preferably the microcrystalline glass having the spinel crystalline phase excludes a quartz crystalline phase.

(67) The microcrystalline glass having the spinel crystalline phase according to any one of (43) to (51) further includes following components by weight percentage: $La_2O_3+Gd_2O_3+Yb_2O_3+Nb_2O_5+WO_3+Bi_2O_3+Ta_2O_5+TeO_2$: 0 to 5%, preferably $La_2O_3+Gd_2O_3+Yb_2O_3+Nb_2O_5+WO_3+Bi_2O_3+Ta_2O_5+TeO_2$: 0 to 2%, more preferably $La_2O_3+Gd_2O_3+Yb_2O_3+Nb_2O_5+WO_3+Bi_2O_3+Ta_2O_5+TeO_2$: 0 to 1%; still more preferably the composition excludes $La_2O_3$, and/or excludes $Gd_2O_3$, and/or excludes $Yb_2O_3$, and/or excludes $Nb_2O_5$, and/or excludes $WO_3$, and/or excludes $Bi_2O_3$, and/or excludes $Ta_2O_5$, and/or excludes $TeO_2$.

(68) The microcrystalline glass having the spinel crystalline phase according to any one of (43) to (52), wherein a crystal grain size of the microcrystalline glass is equal to or less than 60 nm, preferably equal to or less than 45 nm, more preferably in a range from 10 nm to 30 nm; and/or a Young's modulus of the microcrystalline glass is in a range from 80 GPa to 110 Gpa, preferably in a range from 85 GPa to 105 Gpa, more preferably in a range from 90 GPa to 105 Gpa; and/or a Vickers hardness of the microcrystalline glass is equal to or greater than 550 kgf/mm$^2$, preferably equal to or greater than 580 kgf/mm$^2$, more preferably in a range from 600 kgf/mm$^2$ to 650 kgf/mm$^2$.

(69) The microcrystalline glass having the spinel crystalline phase according to any one of (43) to (52), wherein a haze of the microcrystalline glass with a thickness equal to or less than 1 mm is equal to or less than 0.3%, preferably equal to or less than 0.25%, more preferably in a range from 0.05% to 0.2%; and/or an average light transmittance of the microcrystalline glass with a thickness equal to or less than 1 mm in a wavelength range from 400 nm to 800 nm is equal to or greater than 87.0%, preferably equal to or greater than 88.5%, more preferably equal to or greater than 89.5%; and/or a light transmittance of the microcrystalline glass with a thickness equal to or less than 1 mm at a wavelength of 550 nm is equal to or greater than 87.0%, preferably equal to or greater than 88.0%, more preferably equal to or greater than 89.0%; and/or an average |B| value of the microcrystalline glass with a thickness equal to or less than 1 mm for light in a wavelength range from 400 nm to 800 nm is equal to or less than 1.0, preferably equal to or less than 0.8, more preferably in a range from 0.3 to 0.6.

(70) The microcrystalline glass having the spinel crystalline phase according to (69), wherein the thickness of the microcrystalline glass is in a range from 0.2 mm to 1 mm, preferably from 0.3 mm to 0.9 mm, more preferably from 0.5 mm to 0.8 mm, still more preferably 0.55 mm, 0.6 mm, 0.68 mm, 0.7 mm, or 0.75 mm.

(71) The microcrystalline glass having the spinel crystalline phase according to any one of (43) to (51) further includes following components by weight percentage: NiO: 0 to 4%; and/or $Ni_2O_3$: 0 to 4%; and/or CoO: 0 to 2%; and/or $Co_2O_3$: 0 to 2%; and/or $Fe_2O_3$: 0 to 7%; and/or $MnO_2$: 0 to 4%; and/or $Er_2O_3$: 0 to 8%; and/or $Nd_2O_3$: 0 to 8%; and/or $Cu_2O$: 0 to 4%; and/or $Pr_2O_3$: 0 to 8%; and/or $CeO_2$: 0 to 4%.

(72) The microcrystalline glass having the spinel crystalline phase according to any one of (43) to (51) further includes following components by weight percentage: NiO: 0.1% to 4%; and/or $Ni_2O_3$: 0.1% to 4%; and/or CoO: 0.05% to 2%; and/or $Co_2O_3$: 0.05% to 2%; and/or $Fe_2O_3$: 0.2% to 7%; and/or $MnO_2$: 0.1% to 4%; and/or $Er_2O_3$: 0.4% to 8%; and/or $Nd_2O_3$: 0.4% to 8%; and/or $Cu_2O$: 0.5% to 4%; and/or $Pr_2O_3$: 0.4% to 8%; and/or $CeO_2$: 0.5% to 4%.

(73) The microcrystalline glass having the spinel crystalline phase according to any one of (43) to (51) further includes following components by weight percentage: NiO: 0.1% to 3%; and/or $Ni_2O_3$: 0.1% to 3%; and/or CoO: 0.05% to 1.8%; and/or $Co_2O_3$: 0.05% to 1.8%; and/or $Fe_2O_3$: 0.2% to 5%; and/or $MnO_2$: 0.1% to 3%; and/or $Er_2O_3$: 0.4% to 6%; and/or $Nd_2O_3$: 0.4% to 6%; and/or $Cu_2O$: 0.5% to 3%; and/or $Pr_2O_3$: 0.4% to 6%; and/or $CeO_2$: 0.5% to 3%.

(74) The microcrystalline glass having the spinel crystalline phase according to any one of (43) to (51) further includes following components by weight percentage: NiO: 0.1% to 3%; and/or $Ni_2O_3$: 0.1% to 3%.

(75) The microcrystalline glass having the spinel crystalline phase according to any one of (43) to (51) further includes following components by weight percentage: CoO: 0.05% to 1.8%; and/or $Co_2O_3$: 0.05% to 1.8%.

(76) The microcrystalline glass having the spinel crystalline phase according to any one of (43) to (51) further includes following components by weight percentage: $Cu_2O$: 0.5% to 3%; and/or $CeO_2$: 0.5% to 3%.

(77) The microcrystalline glass having the spinel crystalline phase according to any one of (43) to (51) further includes following components by weight percentage: $Fe_2O_3$: 0.2% to 5%, and CoO: 0.05% to 0.3%; or $Fe_2O_3$: 0.2% to 5%, and $Co_2O_3$: 0.05% to 0.3%; or $Fe_2O_3$: 0.2% to 5%, CoO: 0.05% to 0.3%, and NiO: 0.1% to 1%; or $Fe_2O_3$: 0.2% to 5%, $Co_2O_3$: 0.05% to 0.3%, and NiO: 0.1% to 1%.

(78) The microcrystalline glass having the spinel crystalline phase according to any one of (43) to (51) further includes following components by weight percentage: $Pr_2O_3$: 0.4% to 6%; or $Fe_2O_3$: 0.2% to 5%; or $MnO_2$: 0.1% to 3%; or $Er_2O_3$: 0.4% to 6%; or $Nd_2O_3$: 0.4% to 6%.

(79) The microcrystalline glass having the spinel crystalline phase according to any one of (43) to (51) further includes following components by weight percentage: $Er_2O_3$: 0.4% to 6%, $Nd_2O_3$: 0.4% to 4%, and $MnO_2$: 0.1% to 2%.

(80) A glass cover plate includes the microcrystalline glass article having the spinel crystalline phase according to any one of (1) to (42), and/or the microcrystalline glass having the spinel crystalline phase according to any one of (43) to (79).

(81) A glass element includes the microcrystalline glass article having the spinel crystalline phase according to any one of (1) to (42), and/or the microcrystalline glass having the spinel crystalline phase according to any one of (43) to (79).

(82) An electronic device includes the microcrystalline glass article having the spinel crystalline phase according to any one of (1) to (42), and/or the microcrystalline glass having the spinel crystalline phase according to any one of (43) to (79), and/or the glass cover plate according to (80), and/or the glass element according to (81).

(83) A display device includes the microcrystalline glass article having the spinel crystalline phase according to any one of (1) to (42), and/or the microcrystalline glass having the spinel crystalline phase according to any one of (43) to (79), and/or the glass cover plate according to (80), and/or the glass element according to (81).

(84) A method for preparing the microcrystalline glass article having the spinel crystalline phase according to any one of (1) to (42) includes the following steps: forming a matrix glass, subjecting the matrix glass to a crystallization process to form a microcrystalline glass having a spinel crystalline phase, and subjecting the microcrystalline glass having the spinel crystalline phase to a chemical strengthening process, thereby achieving the microcrystalline glass article having the spinel crystalline phase.

(85) The method for preparing the microcrystalline glass article having the spinel crystalline phase according to (84), wherein forming the matrix glass includes the following steps: mixing raw materials uniformly according to the proportions of the components to obtain a mixture; placing the mixture in a crucible; and melting in an electric furnace or a gas furnace at a temperature in a range from 1350 °C to 1550 °C, preferably from 1450 °C to 1550 °C, for a time period in a range from 5 hours to 24 hours; and then clarifying, homogenizing, forming, and annealing in sequence to obtain the matrix glass, wherein the clarifying is performed at a temperature greater than 1550 °C but less than or equal to 1650 °C, and the annealing is performed at a temperature in a range from 450 °C to 600 °C.

(86) The method for preparing the microcrystalline glass article having the spinel crystalline phase according to (84), wherein the crystallization process includes the following steps: heating to a preset crystallization temperature, then holding at the crystallization temperature for a time period, and then cooling, wherein the crystallization temperature is in a range from 600 °C to 800 °C, preferably from 650 °C to 750 °C, and the time period of holding at the crystallization temperature is in a range from 1 hour to 10 hours, preferably from 3 hours to 6 hours.

(87) The method for preparing the microcrystalline glass article having the spinel crystalline phase according to (84), wherein the crystallization process includes the following steps: performing a nucleation process at a first temperature, and then performing a crystal growth process at a second temperature.

(88) The method for preparing the microcrystalline glass article having the spinel crystalline phase according to (87), wherein in the crystallization process, the first temperature is in a range from 600 °C to 700 °C, the second temperature is greater than 700 °C but less than or equal to 800 °C, a time period of holding at the first temperature is in a range from 1 hour to 6 hours, and a time period of holding at the second temperature is in a range from 2 hours to 5 hours.

(89) The method for preparing the microcrystalline glass article having the spinel crystalline phase according to (84), wherein the chemical strengthening process includes: immersing the microcrystalline glass having the spinel crystalline phase in a molten Na salt bath at a temperature in a range from 350 °C to 470 °C, preferably from 400 °C to 460 °C, for a time period in a range from 1 hour to 36 hours, preferably from 2 hours to 15 hours; and/or immersing the microcrystalline glass having the spinel crystalline phase in a mixed molten salt bath of K salt and Na salt at a temperature in a range from 360 °C to 450 °C for a time period in a range from 1 hour to 36 hours, preferably from 2 hours to 24 hours.

(90) A method for preparing the microcrystalline glass having the spinel crystalline phase according to any one of (43) to (79) includes the following steps: forming a matrix glass, and subjecting the matrix glass to a crystallization process to form the microcrystalline glass having the spinel crystalline phase.

(91) The method for preparing the microcrystalline glass having the spinel crystalline phase according to (90), wherein forming the matrix glass includes the following steps: mixing raw materials uniformly according to the proportions of the components to obtain a mixture, placing the mixture in a crucible, and melting in an electric furnace or a gas furnace at a temperature in a range from 1350 °C to 1550 °C, preferably from 1450 °C to 1550 °C, for a time period in a range from 5 hours to 24 hours, and then clarifying, homogenizing, forming, and annealing in sequence to obtain the matrix glass, wherein the clarifying is performed at a temperature is greater than 1550 °C but less than or equal to 1650 °C, and the annealing is performed at a temperature is in a range from 450 °C to 600 °C.

(92) The method for preparing the microcrystalline glass having the spinel crystalline phase according to (90), wherein the crystallization process includes the following steps: heating to a preset crystallization temperature, then holding at the crystallization temperature for a time period, and then cooling, wherein the crystallization temperature is in a range from 600 °C to 800 °C, preferably from 650 °C to 750 °C, and the time period of holding at the crystallization temperature is in a range from 1 hour to 10 hours, preferably from 3 hours to 6 hours.

(93) The method for preparing the microcrystalline glass article having the spinel crystalline phase according to (90), wherein the crystallization process includes the following steps: performing a nucleation process at a first temperature, and then performing a crystal growth process at a second temperature.

(94) The method for preparing the microcrystalline glass article having the spinel crystalline phase according to (93), wherein in the crystallization process, the first temperature is in a range from 600 °C to 700 °C, the second temperature is greater than 700 °C but less than or equal to 800 °C, a time period of holding at the first temperature is in a range from 1 hour to 6 hours, and a time period of holding at the second temperature is in a range from 2 hours to 5 hours.

The present application has the following beneficial effects: through reasonable component design, the microcrystalline glass having a spinel crystalline phase or the microcrystalline glass article having a spinel crystalline phase obtained in the present application exhibit excellent light transmittance and mechanical performance.

DETAILED DESCRIPTION

The microcrystalline glass having a spinel crystalline phase and the microcrystalline glass article having a spinel crystalline phase according to the present application are each a material including both a crystalline phase (also referred to as a crystal) and a glass phase. The crystalline phases of both the microcrystalline glass and the microcrystalline glass article can be identified according to the degrees of peaks appearing in the X-ray diffraction pattern obtained through X-ray diffraction analysis and/or can be determined by Transmission Electron Microscopy and/or can be characterized by Transmission Electron Microscopy Energy-Dispersive X-ray Spectroscopy (TEM/EDX).

Through repeated experiments and research, the inventors of the present application have obtained a microcrystalline glass having a spinel crystalline phase or a microcrystalline glass article having a spinel crystalline phase by specifying the contents and ratio of contents of specific components constituting the microcrystalline glass having a spinel crystalline phase or the microcrystalline glass article having a spinel crystalline phase within specific ranges and forming the specific crystalline phase. In the present application, a microcrystalline glass having a spinel crystalline phase is also briefly referred to as microcrystalline glass, and a microcrystalline glass article having a spinel crystalline phase is also briefly referred to as a microcrystalline glass article.

The contents of components (constituents) of the matrix glass, microcrystalline glass, and microcrystalline glass articles of the present application will be described below. In the present specification, unless otherwise specified, the content of each component is expressed as a weight percentage (wt%) based on the total weight of the matrix glass, microcrystalline glass, or microcrystalline glass article whose composition is converted into oxides. Here, the expression "composition ... converted into oxides" means that, when raw materials of the components of the matrix glass, microcrystalline glass, or microcrystalline glass article of the present application, in forms of oxides, composite salts, hydroxides, etc., decompose and are converted into oxides upon melting, the total weight of these oxides is taken as 100%. Furthermore, in the present specification, when referred to simply as "glass", it refers to the matrix glass before crystallization (i.e., a crystallization process). After the matrix glass is subjected to the crystallization (i.e., the crystallization process), it is called "microcrystalline glass". The term "microcrystalline glass article" refers to the product obtained by chemically strengthening the microcrystalline glass.

Unless otherwise indicated in specific circumstances, the numerical ranges listed herein include the upper and lower limits while "above" and "below" include the endpoint values, and include all integers and fractions within the ranges rather than limited to the specific values listed when defining the ranges. The term "about" as used herein means that the formulations, parameters, and other quantities as well as characteristics are not, and need not be, exact, and may be approximate and/or larger or smaller as needed, reflecting tolerances, conversion factors, measurement errors, etc. The term "and/or" as used herein is inclusive, for example, "A and/or B" means that only A, or only B, or both A and B are present.

In some embodiments of the present application, in the microcrystalline glass having a spinel crystalline phase or the microcrystalline glass article having a spinel crystalline phase, the spinel crystalline phase is preferably a zinc aluminate spinel crystalline phase ($ZnAl_2O_4$). In some embodiments, the spinel crystalline phase has a greater weight percentage than other crystalline phases in the microcrystalline glass or the microcrystalline glass article. In some embodiments, the weight percentage of the spinel crystalline phase in the microcrystalline glass or in the microcrystalline glass article is in a range from 20% to 60%, preferably from 25% to 50%, more preferably from 25% to 45%, still more preferably from 30% to 45%. In some embodiments, the weight percentage of the spinel crystalline phase in the microcrystalline glass or in the microcrystalline glass article is 20%, 21%, 22%, 23%, 24%, 25%, 26%, 27%, 28%, 29%, 30%, 31%, 32%, 33%, 34%, 35%, 36%, 37%, 38%, 39%, 40%, 41%, 42%, 43%, 44%, 45%, 46%, 47%, 48%, 49%, 50%, 51%, 52%, 53%, 54%, 55%, 56%, 57%, 58%, 59%, or 60%.

In some embodiments of the present application, the microcrystalline glass having a spinel crystalline phase or the microcrystalline glass article having a spinel crystalline phase has a quartz crystalline phase (quartz or quartz solid solution). Preferably, the quartz crystalline phase includes β-quartz solid solution. In some embodiments, the weight percentage of the quartz crystalline phase in the microcrystalline glass or in the microcrystalline glass article is equal to or less than 20%, preferably equal to or less than 10%, more preferably equal to or less than 5%, still more preferably the microcrystalline glass or the microcrystalline glass article excludes a quartz crystalline phase. In some embodiments, the weight percentage of the quartz crystalline phase in the microcrystalline glass or in the microcrystalline glass article is 0%, greater than 0%, 0.1%, 0.5%, 1%, 1.5%, 2%, 2.5%, 3%, 3.5%, 4%, 4.5%, 5%, 5.5%, 6%, 6.5%, 7%, 7.5%, 8%, 8.5%, 9%, 9.5%, 10%, 10.5%, 11%, 11.5%, 12%, 12.5%, 13%, 13.5%, 14%, 14.5%, 15%, 15.5%, 16%, 16.5%, 17%, 17.5%, 18%, 18.5%, 19%, 19.5%, or 20%.

$SiO_2$ is the network-forming component of the microcrystalline glass and the microcrystalline glass article of the present application. $SiO_2$ can form a network structure through the structural units of silicon-oxygen tetrahedra, thereby forming the basic structure of silicates. In some embodiments, $SiO_2$ is also an essential component for forming the quartz crystalline phase. If the $SiO_2$ content is too low, the chemical stability of the microcrystalline glass and the microcrystalline glass article deteriorates. If the $SiO_2$ content is too high, the viscosity of the glass increases significantly and the melting temperature of the glass raises, complicating the melting process, and increasing the difficulty of forming the matrix glass. Therefore, the content of $SiO_2$ in the present application is in a range from 40% to 55%, preferably 45% to 53%, and more preferably 48% to 52%. In some embodiments, the content of $SiO_2$ is approximately 40%, 40.5%, 41%, 41.5%, 42%, 42.5%, 43%, 43.5%, 44%, 44.5%, 45%, 45.5%, 46%, 46.5%, 47%, 47.5%, 48%, 48.5%, 49%, 49.5%, 50%, 50.5%, 51%, 51.5%, 52%, 52.5%, 53%, 53.5%, 54%, 54.5%, or 55% of $SiO_2$.

$Al_2O_3$ is conducive to improving the mechanical performance and chemical stability of the microcrystalline glass and the microcrystalline glass article of the present application, and is also an essential component for forming the spinel crystalline phase in the present application. $Al_2O_3$ can form $[AlO_4]$ tetrahedra, which can replace some $[SiO_4]$ tetrahedra to form the network structure. The molecular volume of an $[AlO_4]$ tetrahedron is 41 cm$^3$/mol, while the molecular volume of an $[SiO_4]$ tetrahedron is 27.2 cm$^3$/mol. Replacing some $[SiO_4]$ tetrahedra with $[AlO_4]$ tetrahedra increases the molecular volume of the structural network and expands the structural network space, which facilitates the diffusion of alkali metal ions during the chemical strengthening process and facilitates accommodating a large amount of Na$^+$, thereby promoting ion exchange. If the $Al_2O_3$ content is too low, it is not conducive to improving the strengthening effect and crystal precipitation, leading to inferior mechanical performance and chemical stability of the glass. If the $Al_2O_3$ content is too high, glass melting becomes difficult, leading to an elevated melting temperature, and crystalline stones tend to be precipitated on the surface during forming. Therefore, the content of $Al_2O_3$ is in a range from 15% to 30%, preferably from 18% to 25%, and more preferably from 20% to 23%. In some embodiments, the content of $Al_2O_3$ is approximately 15%, 15.5%, 16%, 16.5%, 17%, 17.5%, 18%, 18.5%, 19%, 19.5%, 20%, 20.5%, 21%, 21.5%, 22%, 22.5%, 23%, 23.5%, 24%, 24.5%, 25%, 25.5%, 26%, 26.5%, 27%, 27.5%, 28%, 28.5%, 29%, 29.5%, or 30%.

In some embodiments, controlling the ratio of the $SiO_2$ content to the $Al_2O_3$ content, i.e., $SiO_2/Al_2O_3$, within a range from 1.5 to 3.2 is beneficial for improving the ball drop test height and the four-point bending strength of both the microcrystalline glass and the microcrystalline glass article, and for increasing the depth of the ion exchange layer and the surface stress of the microcrystalline glass article. Therefore, $SiO_2/Al_2O_3$ is preferably in a range from 1.5 to 3.2, more preferably from 1.7 to 3.0, still more preferably from 1.8 to 2.8, and even more preferably from 2.0 to 2.5. In some embodiments, the value of $SiO_2/Al_2O_3$ is 1.5, 1.55, 1.6, 1.65, 1.7, 1.75, 1.8, 1.85, 1.9, 1.95, 2.0, 2.05, 2.1, 2.15, 2.2, 2.25, 2.3, 2.35, 2.4, 2.45, 2.5, 2.55, 2.6, 2.65, 2.7, 2.75, 2.8, 2.85, 2.9, 2.95, 3.0, 3.05, 3.1, 3.15, or 3.2.

$Li_2O$ can lower the melting point of the glass and is also an essential component for participating in chemical strengthening and improving the mechanical performance of the microcrystalline glass article. Furthermore, $Li_2O$ can provide free oxygen, reducing the coloration caused by $TiO_2$. If the $Li_2O$ content is too high, the crystals in the microcrystalline glass and the microcrystalline glass article tend to grow excessively, and the crystal growth becomes unstable, adversely affecting the transmittance and worsening the chemical stability of the microcrystalline glass and the microcrystalline glass article. Therefore, the content of $Li_2O$ is in a range from 0.1% to 6%, preferably 1% to 5%, and more preferably 2% to 4%. In some embodiments, the content of $Li_2O$ is approximately 0.1%, 0.2%, 0.3%, 0.4%, 0.5%, 1%, 1.5%, 2%, 2.5%, 3%, 3.5%, 4%, 4.5%, 5%, 5.5%, or 6%.

ZnO is an essential component for forming the spinel crystalline phase in the present application. The content of the spinel crystalline phase can be controlled by adjusting the contents of ZnO and $Al_2O_3$ to balance transmittance and mechanical strength. If the ZnO content is too low, the content of the crystalline phase in the microcrystalline glass and the microcrystalline glass article is relatively low, resulting in inferior mechanical performance such as low Vickers hardness and Young's modulus. If the ZnO content is too high, the residual Zn$^{2+}$ in the glass phase hinders ion exchange during the chemical strengthening process, making it difficult to obtain high-performance microcrystalline glass articles. Therefore, the content of ZnO is in a range from 9% to 20%, preferably from 11% to 18%, and more preferably from 12% to 16%. In some embodiments, the content of ZnO is approximately 9%, 9.5%, 10%, 10.5%, 11%, 11.5%, 12%, 12.5%, 13%, 13.5%, 14%, 14.5%, 15%, 15.5%, 16%, 16.5%, 17%, 17.5%, 18%, 18.5%, 19%, 19.5%, or 20%.

In some embodiments, controlling the total content of $Al_2O_3$ and ZnO, i.e., $Al_2O_3$+ZnO, within a range from 26% to 45% is beneficial for achieving a desired content of the spinel crystalline phase in the microcrystalline glass and the microcrystalline glass article, improving the drop resistance and the ball drop test height of the microcrystalline glass and the microcrystalline glass article while preventing deterioration of the surface stress of the microcrystalline glass article.

Therefore, $Al_2O_3$+ZnO is preferably in a range from 26% to 45%, more preferably from 30% to 42%, still more preferably from 32% to 42%, and even more preferably from 35% to 40%. In some embodiments, $Al_2O_3$+ZnO is 26%, 26.5%, 27%, 27.5%, 28%, 28.5%, 29%, 29.5%, 30%, 30.5%, 31%, 31.5%, 32%, 32.5%, 33%, 33.5%, 34%, 34.5%, 35%, 35.5%, 36%, 36.5%, 37%, 37.5%, 38%, 38.5%, 39%, 39.5%, 40%, 40.5%, 41%, 41.5%, 42%, 42.5%, 43%, 43.5%, 44%, 44.5%, or 45%.

In some embodiments, controlling the ratio of the $Al_2O_3$ content to the ZnO content, i.e., $Al_2O_3$/ZnO, within a range from 1.0 to 3.0 is beneficial for improving the hardness of the microcrystalline glass and the microcrystalline glass article, optimizing Young's modulus, and preventing a decrease in transmittance and deterioration of haze of the microcrystalline glass and the microcrystalline glass article. Therefore, $Al_2O_3$/ZnO is preferably in a range from 1.0 to 3.0, more preferably from 1.2 to 2.8, still more preferably from 1.25 to 2.5, and even more preferably from 1.5 to 2.3. In some embodiments, $Al_2O_3$/ZnO is 1.0, 1.05, 1.1, 1.15, 1.2, 1.25, 1.3, 1.35, 1.4, 1.45, 1.5, 1.55, 1.6, 1.65, 1.7, 1.75, 1.8, 1.85, 1.9, 1.95, 2.0, 2.05, 2.1, 2.15, 2.2, 2.25, 2.3, 2.35, 2.4, 2.45, 2.5, 2.55, 2.6, 2.65, 2.7, 2.75, 2.8, 2.85, 2.9, 2.95, or 3.0.

$TiO_2$ is a nucleating agent for the microcrystalline glass and the microcrystalline glass article of the present application. If the $TiO_2$ content is too high, it causes severe coloration (brownish-yellow) in the microcrystalline glass and the microcrystalline glass article, reducing the visible light transmittance and increasing the haze and the |B| value of the microcrystalline glass and the microcrystalline glass article. Additionally, if the $TiO_2$ content is too high, the glass tends to become opalescent during forming and crystallization, making the glass opaque. Therefore, the content of $TiO_2$ in the present application is in a range from 0.5% to 7%, preferably from 1% to 6%, and more preferably from 2% to 5%. In some embodiments, the content of $TiO_2$ is approximately 0.5%, 1%, 1.5%, 2%, 2.5%, 3%, 3.5%, 4%, 4.5%, 5%, 5.5%, 6%, 6.5%, or 7%.

In some embodiments, controlling the ratio of the $Li_2O$ content to the $TiO_2$ content, i.e., $Li_2O$/ $TiO_2$, within a range from 0.2 to 4.5 can effectively reduce the coloration caused by $Ti^{3+}$ ions in the microcrystalline glass and the microcrystalline glass article, improving the transmittance of the microcrystalline glass and the microcrystalline glass article, and optimizing the haze and the |B| value of the microcrystalline glass and the microcrystalline glass article. Therefore, $Li_2O$/$TiO_2$ is preferably in a range from 0.2 to 4.5, more preferably in a range from 0.5 to 3.5, still more preferably in a range from 0.7 to 2.5, and even more preferably in a range from 0.75 to 1.5. In some embodiments, $Li_2O$/$TiO_2$ is 0.2, 0.25, 0.3, 0.35, 0.4, 0.45, 0.5, 0.55, 0.6, 0.65, 0.7, 0.75, 0.8, 0.85, 0.9, 0.95, 1.0, 1.05, 1.1, 1.15, 1.2, 1.25, 1.3, 1.35, 1.4, 1.45, 1.5, 1.55, 1.6, 1.65, 1.7, 1.75, 1.8, 1.85, 1.9, 1.95, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, or 4.5.

In some embodiments, controlling the ratio of the total content of $TiO_2$ and ZnO to the content of $Al_2O_3$, i.e., ($TiO_2$+ZnO)/$Al_2O_3$, within a range from 0.4 to 1.5 can improve the chemical strengthening performance of the microcrystalline glass, increase the depth of the ion exchange layer of the microcrystalline glass article, and improve the fracture toughness, the four-point bending strength, and the ball drop test height of the microcrystalline glass article. Therefore, ($TiO_2$+ZnO)/$Al_2O_3$ is preferably in a range from 0.4 to 1.5, more preferably from 0.5 to 1.2, still more preferably from 0.6 to 1.0, and even more preferably from 0.6 to 0.9. In some embodiments, ($TiO_2$+ZnO)/$Al_2O_3$ is 0.4, 0.45, 0.5, 0.55, 0.6, 0.65, 0.7, 0.75, 0.8, 0.85, 0.9, 0.95, 1.0, 1.05, 1.1, 1.15, 1.2, 1.25, 1.3, 1.35, 1.4, 1.45, or 1.5.

$ZrO_2$ can serve as a nucleating agent for the microcrystalline glass and the microcrystalline glass article. When used together with $TiO_2$, it can maximize the number of crystal nuclei in the microcrystalline glass. A relatively large number of crystal nuclei is beneficial for stable crystal growth and achieving uniform crystal grain size. If the $ZrO_2$ content is too high, the melting difficulty of the glass increases. Therefore, the content of $ZrO_2$ is in a range from 0 to 5%, preferably from 0.5% to 4%, and more preferably from 1% to 3%. In some embodiments, the content of $ZrO_2$ is approximately 0%, greater than 0%, 0.01%, 0.05%, 0.1%, 0.2%, 0.3%, 0.4%, 0.5%, 0.6%, 0.7%, 0.8%, 0.9%, 1%, 1.1%, 1.2%, 1.3%, 1.4%, 1.5%, 1.6%, 1.7%, 1.8%, 1.9%, 2%, 2.1%, 2.2%, 2.3%, 2.4%, 2.5%, 2.6%, 2.7%, 2.8%, 2.9%, 3%, 3.1%, 3.2%, 3.3%, 3.4%, 3.5%, 3.6%, 3.7%, 3.8%, 3.9%, 4%, 4.1%, 4.2%, 4.3%, 4.4%, 4.5%, 4.6%, 4.7%, 4.8%, 4.9%, or 5%.

The solubility of $ZrO_2$ in the glass system of the present application is relatively low. In some embodiments, by incorporating a certain amount of $P_2O_5$, the solubility of $ZrO_2$ in the glass can be improved. However, if too much $P_2O_5$ is incorporated, the glass is prone to phase separation during forming, reducing the chemical stability of the microcrystalline glass and the microcrystalline glass article. Therefore, the content of $P_2O_5$ in the present application is in a range from 0 to 5%, preferably from 0.5% to 4%, and more preferably from 1% to 3%. In some embodiments, the content of $P_2O_5$ is approximately 0%, greater than 0%, 0.01%, 0.05%, 0.1%, 0.2%, 0.3%, 0.4%, 0.5%, 0.6%, 0.7%, 0.8%, 0.9%, 1%, 1.1%, 1.2%, 1.3%, 1.4%, 1.5%, 1.6%, 1.7%, 1.8%, 1.9%, 2%, 2.1%, 2.2%, 2.3%, 2.4%, 2.5%, 2.6%, 2.7%, 2.8%, 2.9%, 3%, 3.1%, 3.2%, 3.3%, 3.4%, 3.5%, 3.6%, 3.7%, 3.8%, 3.9%, 4%, 4.1%, 4.2%, 4.3%, 4.4%, 4.5%, 4.6%, 4.7%, 4.8%, 4.9%, or 5%.

In some embodiments, controlling the ratio of the total content of $Al_2O_3$ and $Li_2O$ to the content of $P_2O_5$, i.e., ($Al_2O_3$+$Li_2O$)/$P_2O_5$, within a range from 5.0 to 45.0 can improve the four-point bending strength and the drop resistance of the microcrystalline glass and the microcrystalline glass article, and increase the surface stress of the microcrystalline glass article. Therefore, ($Al_2O_3$+$Li_2O$)/$P_2O_5$ is preferably in a range from 5.0 to 45.0, more preferably from 7.0 to 35.0, still more preferably from 8.0 to 30.0, and even more preferably from 10.0 to 25.0. In some embodiments, ($Al_2O_3$+ $Li_2O$)/$P_2O_5$ is 5.0, 5.5, 6.0, 6.5, 7.0, 7.5, 8.0, 8.5, 9.0, 9.5, 10.0, 10.5, 11.0, 11.5, 12.0, 12.5, 13.0, 13.5, 14.0, 14.5, 15.0, 15.5, 16.0, 16.5, 17.0, 17.5, 18.0, 18.5, 19.0, 19.5, 20.0, 20.5, 21.0, 21.5, 22.0, 22.5, 23.0, 23.5, 24.0, 24.5, 25.0, 26.0, 27.0, 28.0, 29.0, 30.0, 31.0, 32.0, 33.0, 34.0, 35.0, 36.0, 37.0, 38.0, 39.0, 40.0, 41.0, 42.0, 43.0, 44.0, or 45.0.

In some embodiments, controlling the total content of $P_2O_5$ and $ZrO_2$, i.e., $P_2O_5+ZrO_2$, within a range from 0 to 8% is beneficial for achieving uniform and relatively small crystal grain sizes in the microcrystalline glass and the microcrystalline glass article, improving the transmittance of the microcrystalline glass and the microcrystalline glass article. Therefore, $P_2O_5+ZrO_2$ is preferably in a range from 0 to 8%, more preferably from 0.1% to 7%, and still more preferably from 0.5% to 5%. In some embodiments, $P_2O_5+ZrO_2$ is 0%, greater than 0%, 0.01%, 0.05%, 0.1%, 0.2%, 0.3%, 0.4%, 0.5%, 0.6%, 0.7%, 0.8%, 0.9%, 1%, 1.1%, 1.2%, 1.3%, 1.4%, 1.5%, 1.6%, 1.7%, 1.8%, 1.9%, 2%, 2.1%, 2.2%, 2.3%, 2.4%, 2.5%, 2.6%, 2.7%, 2.8%, 2.9%, 3%, 3.1%, 3.2%, 3.3%, 3.4%, 3.5%, 3.6%, 3.7%, 3.8%, 3.9%, 4%, 4.1%, 4.2%, 4.3%, 4.4%, 4.5%, 4.6%, 4.7%, 4.8%, 4.9%, 5%, 5.1%, 5.2%, 5.3%, 5.4%, 5.5%, 5.6%, 5.7%, 5.8%, 5.9%, 6%, 6.1%, 6.2%, 6.3%, 6.4%, 6.5%, 6.6%, 6.7%, 6.8%, 6.9%, 7%, 7.1%, 7.2%, 7.3%, 7.4%, 7.5%, 7.6%, 7.7%, 7.8%, 7.9%, or 8%.

In some embodiments, controlling the ratio of the $P_2O_5$ content to the $ZrO_2$ content, i.e., $P_2O_5/ZrO_2$, within a range from 0.1 to 5.0 can improve the hardness and fracture toughness of the microcrystalline glass and the microcrystalline glass article, and prevent deterioration in drop resistance and Young's modulus of the microcrystalline glass and the microcrystalline glass article. Therefore, $P_2O_5/ZrO_2$ is preferably in a range from 0.1 to 5.0, more preferably from 0.2 to 3.0, still more preferably from 0.5 to 2.0, and even more preferably from 0.6 to 1.5. In some embodiments, $P_2O_5/ZrO_2$ is 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, or 5.0.

MgO is conducive to reducing the viscosity of the glass, inhibiting glass crystallization during forming, refining the crystal grains during crystallization, and improving low-temperature meltability of the glass. In some embodiments, MgO promotes the formation of the quartz solid solution crystalline phase. If the MgO content is too high, the quartz solid solution crystalline phase tends to be formed during glass crystallization. The crystal grains of the quartz solid solution crystalline phase are relatively large, which may reduce the transmittance of the microcrystalline glass and the microcrystalline glass article. Therefore, the content of MgO is in a range from 0.1% to 6%, preferably from 1 to 5%, and more preferably from 2 to 4%. In some embodiments, the content of MgO is approximately 0.1%, 0.2%, 0.3%, 0.4%, 0.5%, 0.6%, 0.7%, 0.8%, 0.9%, 1%, 1.1%, 1.2%, 1.3%, 1.4%, 1.5%, 1.6%, 1.7%, 1.8%, 1.9%, 2%, 2.1%, 2.2%, 2.3%, 2.4%, 2.5%, 2.6%, 2.7%, 2.8%, 2.9%, 3%, 3.1%, 3.2%, 3.3%, 3.4%, 3.5%, 3.6%, 3.7%, 3.8%, 3.9%, 4%, 4.1%, 4.2%, 4.3%, 4.4%, 4.5%, 4.6%, 4.7%, 4.8%, 4.9%, 5%, 5.1%, 5.2%, 5.3%, 5.4%, 5.5%, 5.6%, 5.7%, 5.8%, 5.9%, or 6%.

In some embodiments, controlling the ratio of the total content of $Li_2O+MgO$ to the content of $Li_2O$, i.e., $(Li_2O+MgO)/TiO_2$, within a range from 0.3 to 8.0 can refine the crystal grains, improve the transmittance and the drop resistance of the microcrystalline glass and the microcrystalline glass article, and improve the haze and the |B| value of the microcrystalline glass and the microcrystalline glass article. Therefore, $(Li_2O+MgO)/TiO_2$ is preferably in a range from 0.3 to 8.0, more preferably from 0.5 to 5.0, still more preferably from 1.0 to 3.0, and even more preferably from 1.2 to 2.5. In some embodiments, $(Li_2O+MgO)/TiO_2$ is 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0, 5.1, 5.2, 5.3, 5.4, 5.5, 5.6, 5.7, 5.8, 5.9, 6.0, 6.1, 6.2, 6.3, 6.4, 6.5, 6.6, 6.7, 6.8, 6.9, 7.0, 7.1, 7.2, 7.3, 7.4, 7.5, 7.6, 7.7, 7.8, 7.9, or 8.0.

In some embodiments, controlling the ratio of the content of $Al_2O_3$ to the total content of MgO and $TiO_2$, i.e., $Al_2O_3/(MgO+TiO_3)$, within a range from 1.3 to 10.0 is beneficial for improving the hardness and the ball drop test height of the microcrystalline glass and the microcrystalline glass article, as well as improving the haze and the surface stress of the microcrystalline glass article. Therefore, $Al_2O_3/(MgO+TiO_2)$ is preferably in a range from 1.3 to 10.0, more preferably from 1.5 to 8.0, still more preferably from 2.5 to 6.5, and even more preferably from 3.0 to 5.5. In some embodiments, $Al_2O_3/(MgO+TiO_2)$ is 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0, 5.1, 5.2, 5.3, 5.4, 5.5, 5.6, 5.7, 5.8, 5.9, 6.0, 6.1, 6.2, 6.3, 6.4, 6.5, 6.6, 6.7, 6.8, 6.9, 7.0, 7.1, 7.2, 7.3, 7.4, 7.5, 7.6, 7.7, 7.8, 7.9, 8.0, 8.1, 8.2, 8.3, 8.4, 8.5, 8.6, 8.7, 8.8, 8.9, 9.0, 9.1, 9.2, 9.3, 9.4, 9.5, 9.6, 9.7, 9.8, 9.9, or 10.0.

$B_2O_3$ facilitates glass melting and improves the melting effect of the glass. If the $B_2O_3$ content is too high, the chemical stability of the glass deteriorates, potentially leading to boron anomaly, where boron-oxygen tetrahedra transform into boron-oxygen triangular structures, reducing the viscosity of the glass. In addition, boron volatilization tends to form striae, resulting in glass inhomogeneity. Therefore, the content of $B_2O_3$ is in a range from 0 to 4%, preferably from 0 to 2%, and more preferably from 0 to 1%. In some embodiments, the content of $B_2O_3$ is approximately 0%, greater than 0%, 0.01%, 0.05%, 0.1%, 0.2%, 0.3%, 0.4%, 0.5%, 0.6%, 0.7%, 0.8%, 0.9%, 1%, 1.1%, 1.2%, 1.3%, 1.4%, 1.5%, 1.6%, 1.7%, 1.8%, 1.9%, 2%, 2.1%, 2.2%, 2.3%, 2.4%, 2.5%, 2.6%, 2.7%, 2.8%, 2.9%, 3%, 3.1%, 3.2%, 3.3%, 3.4%, 3.5%, 3.6%, 3.7%, 3.8%, 3.9%, or 4%.

$Na_2O$ can promote glass melting and improve the chemical strengthening performance of the microcrystalline glass. However, in the present application, too much $Na_2O$ incorporated can lead to an increased number of broken bonds in the glass, reducing the strength of the matrix glass, and consequently affecting the strength of the microcrystalline glass and the microcrystalline glass article. Therefore, the upper limit of the $Na_2O$ content in the present application is 6%, preferably 4%, and more preferably 2%. In some embodiments, the content of $Na_2O$ is approximately 0%, greater than 0%, 0.01%, 0.05%, 0.1%, 0.2%, 0.3%, 0.4%, 0.5%, 0.6%, 0.7%, 0.8%, 0.9%, 1%, 1.1%, 1.2%, 1.3%, 1.4%, 1.5%, 1.6%, 1.7%, 1.8%, 1.9%, 2%, 2.1%, 2.2%, 2.3%, 2.4%, 2.5%, 2.6%, 2.7%, 2.8%, 2.9%, 3%, 3.1%, 3.2%, 3.3%, 3.4%, 3.5%, 3.6%, 3.7%, 3.8%, 3.9%, 4%, 4.1%, 4.2%, 4.3%, 4.4%, 4.5%, 4.6%, 4.7%, 4.8%, 4.9%, 5%, 5.1%, 5.2%, 5.3%, 5.4%, 5.5%, 5.6%, 5.7%, 5.8%, 5.9%, or 6%.

In some embodiments, controlling the ratio of the total content of $SiO_2$ and $Na_2O$ to the content of ZnO, i.e., $(SiO_2+Na_2O)/ZnO$, within a range from 2.2 to 6.2 can improve the $|B|$ value while improving the fracture toughness and the compressive strength of the microcrystalline glass and the microcrystalline glass article. Therefore, $(SiO_2+Na_2O)/ZnO$ is preferably in a range from 2.2 to 6.2, more preferably 2.5 to 6.0, still more preferably 2.8 to 5.5, and even more preferably 3.0 to 5.0. In some embodiments, $(SiO_2+Na_2O)/ZnO$ is 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0, 5.1, 5.2, 5.3, 5.4, 5.5, 5.6, 5.7, 5.8, 5.9, 6.0, 6.1, or 6.2.

$K_2O$ is conducive to reducing the melting temperature of the glass, facilitates chemical strengthening, and can increase the depth of the ion exchange layer of the microcrystalline glass article. However, too much $K_2O$ can easily lead to a decrease in the chemical stability and hardness of the glass. Therefore, the content of $K_2O$ is equal to or less than 3%, preferably equal to or less than 2%, and more preferably equal to or less than 1%. In some embodiments, the content of $K_2O$ is approximately 0%, greater than 0%, 0.01%, 0.05%, 0.1%, 0.2%, 0.3%, 0.4%, 0.5%, 0.6%, 0.7%, 0.8%, 0.9%, 1%, 1.1%, 1.2%, 1.3%, 1.4%, 1.5%, 1.6%, 1.7%, 1.8%, 1.9%, 2%, 2.1%, 2.2%, 2.3%, 2.4%, 2.5%, 2.6%, 2.7%, 2.8%, 2.9%, or 3%.

In some embodiments, controlling the ratio of the total content of $Na_2O$ and $K_2O$ to the content of ZnO, i.e., $(Na_2O+K_2O)/ZnO$, to be equal to or less than 0.8 can refine the crystal grains, reducing the crystal grain size of the microcrystalline glass and the microcrystalline glass article, improving the transmittance and the compressive strength of the microcrystalline glass and the microcrystalline glass article, as well as optimizing the haze of the microcrystalline glass and the microcrystalline glass article. Therefore, $(Na_2O+K_2O)/ZnO$ is preferably equal to or less than 0.8, more preferably equal to or less than 0.6, still more preferably equal to or less than 0.4, and even more preferably equal to or less than 0.2. In some embodiments, $(Na_2O+K_2O)/ZnO$ is 0, greater than 0, 0.01, 0.02, 0.03, 0.04, 0.05, 0.06, 0.07, 0.08, 0.09, 0.1, 0.15, 0.2, 0.25, 0.3, 0.35, 0.4, 0.45, 0.5, 0.55, 0.6, 0.65, 0.7, 0.75, or 0.8.

CaO, BaO, and SrO, as fluxing agents, do not participate in crystalline phase formation and remain in the residual glass phase of the microcrystalline glass. They are conducive to reducing the melting and processing temperatures, but excessive content can impair the nucleation and crystallization during the transformation of the matrix glass into the microcrystalline glass and adversely affect the chemical stability of the microcrystalline glass. Therefore, the total content of CaO, BaO, and SrO, i.e., CaO+BaO+SrO, is in a range from 0 to 5%, preferably from 0 to 4%, and more preferably from 0 to 2%. In some embodiments, CaO+BaO+SrO is 0%, greater than 0%, 0.01%, 0.05%, 0.1%, 0.2%, 0.3%, 0.4%, 0.5%, 0.6%, 0.7%, 0.8%, 0.9%, 1%, 1.1%, 1.2%, 1.3%, 1.4%, 1.5%, 1.6%, 1.7%, 1.8%, 1.9%, 2%, 2.1%, 2.2%, 2.3%, 2.4%, 2.5%, 2.6%, 2.7%, 2.8%, 2.9%, 3%, 3.1%, 3.2%, 3.3%, 3.4%, 3.5%, 3.6%, 3.7%, 3.8%, 3.9%, 4%, 4.1%, 4.2%, 4.3%, 4.4%, 4.5%, 4.6%, 4.7%, 4.8%, 4.9%, or 5%.

$Y_2O_3$ can promote the melting of $ZrO_2$ and reduce the difficulty of glass melting. Excessive content of $Y_2O_3$ can make glass crystallization difficult and reduce the ball drop test height of the microcrystalline glass and the microcrystalline glass article. Therefore, the upper limit of the $Y_2O_3$ content is 6%, preferably 4%, and more preferably 2%. In some embodiments, the content of $Y_2O_3$ is approximately 0%, greater than 0%, 0.01%, 0.05%, 0.1%, 0.2%, 0.3%, 0.4%, 0.5%, 0.6%, 0.7%, 0.8%, 0.9%, 1%, 1.1%, 1.2%, 1.3%, 1.4%, 1.5%, 1.6%, 1.7%, 1.8%, 1.9%, 2%, 2.1%, 2.2%, 2.3%, 2.4%, 2.5%, 2.6%, 2.7%, 2.8%, 2.9%, 3%, 3.1%, 3.2%, 3.3%, 3.4%, 3.5%, 3.6%, 3.7%, 3.8%, 3.9%, 4%, 4.1%, 4.2%, 4.3%, 4.4%, 4.5%, 4.6%, 4.7%, 4.8%, 4.9%, 5%, 5.1%, 5.2%, 5.3%, 5.4%, 5.5%, 5.6%, 5.7%, 5.8%, 5.9%, or 6%.

In some embodiments, the glass, the microcrystalline glass, or the microcrystalline glass article can further include 0 to 2% of a clarifying agent to improve the bubble removal ability of the glass, the microcrystalline glass, or the microcrystalline glass article. Such a clarifying agent includes, but is not limited to, one or more of $Sb_2O_3$, $SnO_2$, SnO, $CeO_2$, a fluorine (F) compound, a chlorine (Cl) compound, or a bromine (Br) compound, preferably $Sb_2O_3$ as the clarifying agent. When the above clarifying agents are present individually or in combination, the upper limit of the content thereof is preferably 2%, more preferably 1%, and even more preferably 0.5%. In some embodiments, the content of one or more of the clarifying agents is about 0%, greater than 0%, 0.01%, 0.05%, 0.1%, 0.2%, 0.3%, 0.4%, 0.5%, 0.6%, 0.7%, 0.8%, 0.9%, 1%, 1.1%, 1.2%, 1.3%, 1.4%, 1.5%, 1.6%, 1.7%, 1.8%, 1.9%, or 2%.

Without compromising the performance of the glass, the microcrystalline glass, or the microcrystalline glass article of the present application, other components not mentioned above, such as $La_2O_3$, $Gd_2O_3$, $Yb_2O_3$, $Nb_2O_5$, $WO_3$, $Bi_2O_3$, $Ta_2O_5$, $TeO_2$, etc., can be appropriately added. However, to maintain the excellent performance of the glass, the microcrystalline glass, or the microcrystalline glass article of the present application, the respective content of $La_2O_3$, $Gd_2O_3$, $Yb_2O_3$, $Nb_2O_5$, $WO_3$, $Bi_2O_3$, $Ta_2O_5$, or $TeO_2$ or the total content of any combination thereof is preferably equal to or less than 5%, more preferably equal to or less than 2%, still more preferably equal to or less than 1%, and even more preferably 0.

PbO and $As_2O_3$ are toxic substances, and containing even a small amount does not meet environmental requirements. Therefore, in some embodiments of the present application, PbO and/or $As_2O_3$ are preferably excluded.

In some embodiments of the present application, by including a colorant, colored matrix glass, microcrystalline glass, or microcrystalline glass article can be prepared, making the matrix glass, the microcrystalline glass, or the microcrystalline glass article exhibits different colors. The colorant includes: NiO: 0 to 4%; and/or $Ni_2O_3$: 0 to 4%; and/or CoO: 0 to 2%; and/or $Co_2O_3$: 0 to 2%; and/or $Fe_2O_3$: 0 to 7%; and/or $MnO_2$: 0 to 4%; and/or $Er_2O_3$: 0 to 8%; and/or $Nd_2O_3$: 0 to 8%; and/or $Cu_2O$: 0 to 4%; and/or $Pr_2O_5$: 0 to 8%; and/or $CeO_2$: 0 to 4%. The weight percentage contents and effects of the colorants are detailed below:

In the present application, the matrix glass, the microcrystalline glass, or the microcrystalline glass article with a brown or green color is prepared using NiO, $Ni_2O_3$, or $Pr_2O_5$ as a colorant. NiO and $Ni_2O_3$ are used as colorants for preparing the brown or green matrix glass, microcrystalline glass, or microcrystalline glass article. The two components can be used alone or in combination, each with a content generally equal to or less than 4%, preferably equal to or less than 3%. If the content exceeds 4%, the colorant cannot dissolve well in the matrix glass, the microcrystalline glass, or the microcrystalline glass article. The lower limit of the content of each component is 0.1%. If the content is lower than 0.1%, the color of the matrix glass, the microcrystalline glass, or the microcrystalline glass article is not visible. In some embodiments, NiO or $Ni_2O_3$ can be used, and the content thereof can be about 0.1%, 0.2%, 0.3%, 0.4%, 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, 2.0%, 2.1%, 2.2%, 2.3%, 2.4%, 2.5%, 2.6%, 2.7%, 2.8%, 2.9%, 3.0%, 3.1%, 3.2%, 3.3%, 3.4%, 3.5%, 3.6%, 3.7%, 3.8%, 3.9%, or 4.0%. When used in combination, the total content of NiO and $Ni_2O_3$ is generally equal to or less than 4%, and the lower limit of the total content is 0.1%. In some embodiments, the total content of NiO and $Ni_2O_3$ used in combination can be about 0.1%, 0.2%, 0.3%, 0.4%, 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, 2.0%, 2.1%, 2.2%, 2.3%, 2.4%, 2.5%, 2.6%, 2.7%, 2.8%, 2.9%, 3.0%, 3.1%, 3.2%, 3.3%, 3.4%, 3.5%, 3.6%, 3.7%, 3.8%, 3.9%, or 4.0%. $Pr_2O_5$ is used as a colorant for preparing the green matrix glass, microcrystalline glass, or microcrystalline glass article. $Pr_2O_5$ can be used alone, with a content generally equal to or less than 8%, preferably equal to or less than 6%. The lower limit of the content is 0.4%. If the content is lower than 0.4%, the color of the matrix glass, the microcrystalline glass, or the microcrystalline glass article is not visible. In some embodiments, the content of $Pr_2O_5$ can be about 0.4%, 0.6%, 0.8%, 1.0%, 1.2%, 1.4%, 1.6%, 1.8%, 2.0%, 2.2%, 2.4%, 2.6%, 2.8%, 3.0%, 3.2%, 3.4%, 3.6%, 3.8%, 4.0%, 4.2%, 4.4%, 4.6%, 4.8%, 5.0%, 5.2%, 5.4%, 5.6%, 5.8%, 6.0%, 6.2%, 6.4%, 6.6%, 6.8%, 7.0%, 7.2%, 7.4%, 7.6%, 7.8%, or 8.0%.

In the present application, the matrix glass, the microcrystalline glass, or the microcrystalline glass article with a blue color is prepared using CoO or $Co_2O_3$ as a colorant. The two colorant components can be used alone or mixed, each with a content generally equal to or less than 2%, preferably equal to or less than 1.8%. If the content exceeds 2%, the colorant cannot dissolve well in the matrix glass, the microcrystalline glass, or the microcrystalline glass article. The lower limit of the content of each component is 0.05%. If the content is lower than 0.05%, the color of the matrix glass, the microcrystalline glass, or the microcrystalline glass article is not visible. In some embodiments, CoO or $Co_2O_3$ can be used, and the content thereof can be about 0.05%, 0.1%, 0.2%, 0.3%, 0.4%, 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, or 2.0%. When used in combination, the total content of CoO and $Co_2O_3$ does not exceed 2%, and the lower limit of the total content is 0.05%. In some embodiments, the total content of CoO and $Co_2O_3$ used in combination can be about 0.05%, 0.1%, 0.2%, 0.3%, 0.4%, 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, or 2.0%.

In the present application, the matrix glass, the microcrystalline glass, or the microcrystalline glass article with a yellow color is prepared using $Cu_2O$ or $CeO_2$ as a colorant. The two colorant components can be used alone or in combination. The lower limit of the content of each component is 0.5%. If the content is lower than 0.5%, the color of the matrix glass, the microcrystalline glass, or the microcrystalline glass article is not visible. When $Cu_2O$ is used alone, the content thereof is equal to or less than 4%, preferably equal to or less than 3%. If the content exceeds 4%, it may easily cause crystallization of the matrix glass. In some embodiments, the content of $Cu_2O$ is about 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, 2.0%, 2.1%, 2.2%, 2.3%, 2.4%, 2.5%, 2.6%, 2.7%, 2.8%, 2.9%, 3.0%, 3.1%, 3.2%, 3.3%, 3.4%, 3.5%, 3.6%, 3.7%, 3.8%, 3.9%, or 4.0%. When $CeO_2$ is used alone, the content thereof is generally equal to or less than 4%, preferably equal to or less than 3%. If the content exceeds 4%, the matrix glass, the microcrystalline glass, or the microcrystalline glass article may lack gloss. In some embodiments, the content of $CeO_2$ is about 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, 2.0%, 2.1%, 2.2%, 2.3%, 2.4%, 2.5%, 2.6%, 2.7%, 2.8%, 2.9%, 3.0%, 3.1%, 3.2%, 3.3%, 3.4%, 3.5%, 3.6%, 3.7%, 3.8%, 3.9%, or 4.0%. Furthermore, a small amount of $CeO_2$ added to the glass has a bubble removal effect. $CeO_2$ can also be used as the clarifying agent in the glass, with a content equal to or less than 2%, preferably equal to or less than 1%, more preferably equal to or less than 0.5%. When the two colorants are used in combination, the total content of the colorants is generally equal to or less than 4%, and the lower limit of the total content is 0.5%. In some embodiments, the total content of $CeO_2$ and $Cu_2O$ used in combination can be about 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, 2.0%, 2.1%, 2.2%, 2.3%, 2.4%, 2.5%, 2.6%, 2.7%, 2.8%, 2.9%, 3.0%, 3.1%, 3.2%, 3.3%, 3.4%, 3.5%, 3.6%, 3.7%, 3.8%, 3.9%, or 4.0%.

In the present application, the matrix glass, the microcrystalline glass, or the microcrystalline glass article with a black or smoke-gray color is prepared using $Fe_2O_3$ alone, or a combination of $Fe_2O_3$ and CoO, or a combination of $Fe_2O_3$ and $Co_2O_3$, or a combination of $Fe_2O_3$, CoO, and NiO, or a combination of $Fe_2O_3$, $Co_2O_3$, and NiO, as a colorant. $Fe_2O_3$ is a main colorant for preparing the black and smoke-gray matrix glass, microcrystalline glass, or microcrystalline glass articles, with a content equal to or less than 7%, preferably equal to or less than 5%. The lower limit of the content is 0.2%. In some embodiments, the content of $Fe_2O_3$ can be about 0.2%, 0.3%, 0.4%, 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, 2.0%, 2.1%, 2.2%, 2.3%, 2.4%, 2.5%, 2.6%, 2.7%, 2.8%, 2.9%, 3.0%, 3.1%, 3.2%, 3.3%, 3.4%, 3.5%, 3.6%, 3.7%, 3.8%, 3.9%, 4.0%, 4.5%, 5.0%, 5.5%, 6.0%, 6.5%, or 7.0%. CoO and $Co_2O_3$ can absorb visible light and can enhance the coloration degree of the matrix glass, the microcrystalline glass, or the microcrystalline glass article. When used in combination with $Fe_2O_3$, their individual content is generally equal to or less than 0.6%, with a lower limit of 0.2%. In some embodiments, the content of CoO and/or $Co_2O_3$ can be about 0.2%, 0.3%, 0.4%, 0.5%, or 0.6%. NiO can absorb visible light and can enhance the coloration degree of the matrix glass, the microcrystalline glass, or the microcrystalline glass article. When used in combination with other colorants, the content of NiO is generally equal to or less than 1%, with a lower limit of a total content the colorants of 0.2%. In some embodiments, the content of NiO can be 0.2%, 0.3%, 0.4%, 0.5%, 0.6%, 0.7%, 0.8%, 0.9%, or 1.0%.

In the present application, the matrix glass, the microcrystalline glass, or the microcrystalline glass article with a purple color is prepared using $MnO_2$ as a colorant, with a content generally equal to or less than 4%, preferably equal to or less than 3%. The lower limit of the content is 0.1%. If the content is lower than 0.1%, the color of the matrix glass, the microcrystalline glass, or the microcrystalline glass article is not visible. In some embodiments, the content of $MnO_2$ can be about 0.1%, 0.2%, 0.3%, 0.4%, 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, 2.0%, 2.1%, 2.2%, 2.3%, 2.4%, 2.5%, 2.6%, 2.7%, 2.8%, 2.9%, 3.0%, 3.1%, 3.2%, 3.3%, 3.4%, 3.5%, 3.6%, 3.7%, 3.8%, 3.9%, 4.0%.

In the present application, the matrix glass, the microcrystalline glass, or the microcrystalline glass article with a pink color is prepared using $Er_2O_3$ as a colorant, with a content generally equal to or less than 8%, preferably equal to or less than 6%. Due to the low coloring efficiency of the rare earth element, $Er_2O_3$ with a content exceeding 8% cannot further deepen the color of the matrix glass, the microcrystalline glass, or the microcrystalline glass article, but instead increases the cost. The lower limit of the content is 0.4%. If the content is lower than 0.4%, the color of the matrix glass, the microcrystalline glass, or the microcrystalline glass article is not visible. In some embodiments, the content of $Er_2O_3$ can be about 0.4%, 0.6%, 0.8%, 1.0%, 1.2%, 1.4%, 1.6%, 1.8%, 2.0%, 2.2%, 2.4%, 2.6%, 2.8%, 3.0%, 3.2%, 3.4%, 3.6%, 3.8%, 4.0%, 4.2%, 4.4%, 4.6%, 4.8%, 5.0%, 5.2%, 5.4%, 5.6%, 5.8%, 6.0%, 6.2%, 6.4%, 6.6%, 6.8%, 7.0%, 7.2%, 7.4%, 7.6%, 7.8%, 8.0%.

In the present application, the matrix glass, the microcrystalline glass, or the microcrystalline glass with a reddish-purple color is prepared using $Nd_2O_3$ as a colorant, with a content of generally equal to or less than 8%, preferably equal to or less than 6%. Due to the low coloring efficiency of the rare earth element, $Nd_2O_3$ with a content exceeding 8% cannot further deepen the color of the matrix glass, the microcrystalline glass, or the microcrystalline glass article, but instead increases the cost. The lower limit of the content is 0.4%. If the content is lower than 0.4%, the color of the matrix glass, the microcrystalline glass, or the microcrystalline glass article is not visible. In some embodiments, the content of $Nd_2O_3$ can be about 0.4%, 0.6%, 0.8%, 1.0%, 1.2%, 1.4%, 1.6%, 1.8%, 2.0%, 2.2%, 2.4%, 2.6%, 2.8%, 3.0%, 3.2%, 3.4%, 3.6%, 3.8%, 4.0%, 4.2%, 4.4%, 4.6%, 4.8%, 5.0%, 5.2%, 5.4%, 5.6%, 5.8%, 6.0%, 6.2%, 6.4%, 6.6%, 6.8%, 7.0%, 7.2%, 7.4%, 7.6%, 7.8%, 8.0%.

In the present application, the matrix glass, the microcrystalline glass, or the microcrystalline glass article with a red color is prepared using mixed colorants of $Er_2O_3$, $Nd_2O_3$, and $MnO_2$. In the glass, Er ions absorb light at a wavelength of 400 nm to 500 nm, Mn ions absorb light mainly at a wavelength of 500 nm, and Nd ions intensively absorb light mainly at a wavelength of 580 nm. The mixture of the three substances can be used to prepare red matrix glass, microcrystalline glass, or microcrystalline glass article. $Er_2O_3$ and $Nd_2O_3$ are rare earth element-containing colorants and thus have weak coloring ability. The content of $Er_2O_3$ is equal to or less than 6%, and the content of $Nd_2O_3$ is equal to or less than 4%. The content of $MnO_2$, which has strong coloring ability, is equal to or less than 2%. The lower limit of the total content of the mixed colorants is 0.9%.

The terms "exclude" and "0%" as used herein mean that the compound, molecule, or element, etc., is not intentionally added as a raw material to the matrix glass, the microcrystalline glass, or the microcrystalline glass article of the present application. However, due to the raw materials and/or equipment used in the production of the matrix glass, the microcrystalline glass, or the microcrystalline glass article, certain impurities or components that are not intentionally added may be present in small or trace amounts in the final matrix glass, microcrystalline glass, or microcrystalline glass article. The matrix glass, the microcrystalline glass, or the microcrystalline glass article in such circumstances shall fall within the protection scope of the present application.

The sizes of crystal grains and the types of crystalline phases in the microcrystalline glass or the microcrystalline glass article of the present application can affect the haze and light transmittance of the microcrystalline glass or the microcrystalline glass article. The smaller the crystal grains, the higher the light transmittance. The lower the haze, the higher the light transmittance. In some embodiments, the haze of the microcrystalline glass article or the microcrystalline glass with a thickness equal to or less than 1 mm is equal to or less than 0.3%, preferably equal to or less than 0.25%, more preferably in a range from 0.05% to 0.2%. In some embodiments, the size of crystal grains of the microcrystalline glass article or the microcrystalline glass is equal to or less than 60 nm, preferably equal to or less than 45 nm, more preferably in a range 10 nm to 30 nm.

In some embodiments, the crystalline phase content and the refractive index of the microcrystalline glass or microcrystalline glass article of the present application can affect the |B| value of the microcrystalline glass or the microcrystalline glass article. The microcrystalline glass or the microcrystalline glass article appearing bluish or yellowish in the invisible light range compromises the optical performance of the product. The yellow-blue value is represented by the |B| value in LAB (the chromaticity of the color of a substance). The microcrystalline glass or the microcrystalline glass article of the present application exhibits a relatively low |B| value in the visible light range. In some embodiments, for light in a wavelength range from 400 nm to 800nm, the average |B| value of the microcrystalline glass article or the microcrystalline glass with a thickness equal to or less than 1 mm is equal to or less than 1.0, preferably equal to or less than 0.8, more preferably in a range from 0.3 to 0.6.

In some embodiments, the microcrystalline glass or the microcrystalline glass article of the present application exhibits high transparency in the visible light range, i.e., the microcrystalline glass or the microcrystalline glass article is transparent. The microcrystalline glass or the microcrystalline glass article exhibits high transmittance in the visible light range. In some embodiments, the average light transmittance of the microcrystalline glass article or the microcrystalline glass with a thickness equal to or less than 1 mm at a wavelength range from 400 nm to 800 nm is preferably equal to or greater than 87.0%, more preferably equal to or greater than 88.5%, still more preferably equal to or greater than 89.5%. In some embodiments, the light transmittance of the microcrystalline glass article or the microcrystalline glass with a thickness equal to or less than 1 mm at a wavelength of 550 nm is preferably equal to or greater than 87.0%, more preferably equal to or greater than 88.0%, still more preferably equal to or greater than 89.0%.

In some embodiments, an antimicrobial component can be added to the matrix glass, the microcrystalline glass, or the microcrystalline glass article. The microcrystalline glass or the microcrystalline glass article described herein can be applied in, for example, kitchen or food service countertops, which are prone to exposure to harmful bacteria. The antimicrobial component contained in the matrix glass, the microcrystalline glass, or the microcrystalline glass article includes but is not limited to Ag, AgO, Cu, CuO, $Cu_2O$, etc. In some embodiments, the content of each or a combination of the antimicrobial components is equal to or less than 2%, preferably equal to or less than 1%.

The matrix glass, the microcrystalline glass having a spinel crystalline phase, and the microcrystalline glass article having a spinel crystalline phase of the present application can be produced and prepared by the following methods:

The matrix glass can be formed by uniformly mixing raw materials, such as oxides, composite salts, hydroxides, etc., according to the component proportions to obtain a mixture; placing the mixture in a crucible, e.g., a platinum or quartz crucible, and depending on the difficulty of melting the glass components, melting in an electric furnace or a gas furnace at a temperature in a range from 1350 °C to 1550 °C, preferably from 1450 °C to 1550 °C, for a period time in a range from 5 hours to 24 hours; and then clarifying, homogenizing, forming, and annealing in sequence to obtain the matrix glass, wherein the clarifying is performed at a temperature greater than 1550 °C but less than or equal to 1650 °C, and the annealing is performed at a temperature is in a range from 450 °C to 600 °C.

The matrix glass of the present application can be formed by well-known methods.

The matrix glass of the present application, after forming or after forming process, is subjected to a crystallization process to precipitate crystals uniformly in the glass, thereby obtaining the microcrystalline glass. This crystallization process can be conducted in one stage or in two stages, preferably in two stages. The two-stage crystallization process involves a nucleation process at a first temperature, followed by a crystal growth process at a second temperature. The crystallization process performed at the first temperature is referred to as a first crystallization process, and the crystallization process performed at the second temperature is referred to as a second crystallization process.

To achieve the desired physical and chemical performance of the microcrystalline glass, the crystallization process is preferably as follows:

When the crystallization process is conducted in one stage, the nucleation process and the crystal growth process can be performed continuously. That is, the temperature is raised to a preset crystallization temperature, held at the preset crystallization temperature for a time period, and then lowered. The crystallization temperature is preferably in a range from 600 °C to 800 °C, and more preferably from 650 °C to 750 °C to precipitate the desired crystalline phase. The time period of holding at the crystallization temperature is preferably in a range from 1 hour to 10 hours, and more preferably from 3 hours to 6 hours.

When the crystallization process is conducted in two stages, the first temperature is preferably in a range from 600 °C to 700 °C, the second temperature is preferably greater than 700 °C but less than or equal to 800 °C, the time period of holding at the first temperature is preferably in a range from 1 hour to 6 hours, and the time period of holding at the second temperature is preferably in a range from 2 hours to 5 hours.

In some embodiments, the matrix glass or the microcrystalline glass described herein can be manufactured into a shaped body, including but not limited to a sheet, using various processes known in the art, including but not limited to slot-drawing, float glass process, rolling, or other sheet-forming processes. Alternatively, the matrix glass or the microcrystalline glass can be formed by float glass or rolling methods known in the art. The shaped bodies of the present application also includes lenses, prisms, etc.

The matrix glass or the microcrystalline glass of the present application can be processed into a sheet as a shaped glass body or a shaped microcrystalline glass body by a method such as, but not limited to, grinding or polishing.

The matrix glass or the microcrystalline glass of the present application can be formed into shaped glass bodies or microcrystalline glass shaped bodies of various shapes by methods such as, but not limited to, hot bending or pressing at a certain temperature.

In some embodiments, the shaped glass body or shaped microcrystalline glass body can be prepared using a hot bending process. The hot bending process involves placing 2D or 2.5D glass or microcrystalline glass in a mold, and sequentially performing steps including preheating, pressing, and cooling under pressure in a hot bending machine to obtain a shaped glass body or shaped microcrystalline glass body with a 3D curved surface.

In some embodiments, the shaped microcrystalline glass body has a 2.5D or 3D structure, meaning that the shaped microcrystalline glass body has a non-planar structure. The "non-planar structure" described herein refers to a 2.5D or 3D shape in which at least a portion of the shaped microcrystalline glass body extends outward or extends at an angle relative to the plane defined by the original, as-formed configuration of the 2D matrix glass. The 2.5D or 3D shaped microcrystalline glass body formed from the matrix glass can have one or more raised or curved portions.

The matrix glass, the microcrystalline glass having a spinel crystalline phase, and the microcrystalline glass article having a spinel crystalline phase of the present application can have any reasonable and practical thickness required.

The microcrystalline glass having a spinel crystalline phase of the present application can exhibit improved mechanical performance through crystal precipitation, and can be further formed into a microcrystalline glass article having a spinel crystalline phase to achieve further improved mechanical performance through forming a compressive stress layer.

In some embodiments, the matrix glass or the microcrystalline glass can be processed into a sheet, and/or can be shaped, e.g., drilled, hot bent, etc., polished and/or ground after shaping, and then chemically strengthened through a chemical strengthening process.

The chemical strengthening process described in the present application refers to the ion exchange process. During the ion exchange process, smaller metal ions in the matrix glass or the microcrystalline glass are replaced or "exchanged" with larger metal ions of the same valence adjacent to the matrix glass or microcrystalline glass. Replacing smaller ions with larger ions creates compressive stress within the matrix glass or the microcrystalline glass, thereby forming a compressive stress layer.

In some embodiments, the metal ions are monovalent alkali metal ions, e.g., $Na^+$, $K^+$, $Rb^+$, $Cs^+$, etc. The ion exchange is carried out by immersing the matrix glass or the microcrystalline glass in a salt bath containing at least one molten salt including the larger metal ions, wherein the larger metal ions are capable of replacing the smaller metal ions in the matrix glass. Alternatively, other monovalent metal ions such as $Ag^+$, $Tl^+$, $Cu^+$, etc., can be used for exchanging monovalent ions. One or more ion exchange processes used for chemically strengthening the matrix glass or the microcrystalline glass can include, but are not limited to: immersing the matrix glass or the microcrystalline glass in a single salt bath; or immersing the matrix glass or the microcrystalline glass in multiple salt baths of the same or different compositions, and washing and/or annealing between immersions.

In some embodiments, the ion exchange is conducted by immersing the microcrystalline glass or the microcrystalline glass article in a molten Na salt (e.g., $NaNO_3$) bath at a temperature in a range from 350 °C to 470 °C, preferably from 400 °C to 460 °C, for a time period in a range from 1 hour to 36 hours, preferably from 2 hours to 15 hours. In these embodiments, some of the Li ions in the matrix glass or the microcrystalline glass are replaced with Na ions, thereby forming a surface compression layer which exhibits high mechanical performance. In some embodiments, the ion exchange is conducted by immersing the microcrystalline glass or the microcrystalline glass article in a mixed molten salt bath of K salt and Na salt at a temperature in a range from 360 °C to 450 °C for a time period in a range from 1 hour to 36 hours, preferably from 2 hours to 24 hours.

The microcrystalline glass having a spinel crystalline phase according to the present application exhibits efficient low-temperature ion exchange performance. In some embodiments, the depth of the Na-ion exchange layer can be equal to or greater than 75 $\mu$m even at a relatively low ion exchange temperature for a relatively short ion exchange time period. After the ion exchange, the hardness of the microcrystalline glass article having the spinel crystalline phase is significantly improved. The main reason is that the ion exchange creates high compressive stress on the surface of the microcrystalline glass article having the spinel crystalline phase through a "crowding effect", increasing the deformation resistance and hardness of the microcrystalline glass article having the spinel crystalline phase. In some embodiments, after chemical strengthening, the Vickers hardness of the microcrystalline glass article having the spinel crystalline phase according to the present application can be equal to or greater than 650 kgf/mm$^2$.

The various performance indicators of the microcrystalline glass having the spinel crystalline phase and/or the microcrystalline glass article having the spinel crystalline phase according to the present application were tested using the following methods:

[Haze]

Haze was measured on samples with a thickness equal to or less than 1 mm using a Minolta CM3600A haze meter, according to standard GB2410-80.

[Crystal Grain Size]

The crystal grain size was determined using a scanning electron microscope (SEM). Specifically, the microcrystalline glass was subjected to a surface treatment in HF acid, followed by sputtering gold on the surface of the microcrystalline glass. The surface was then scanned under the scanning electron microscope (SEM) to determine the crystal grain size.

[Light Transmittance]

The light transmittance described herein refers to external transmittance, which is also referred to as transmittance.

The samples were processed to have a thickness equal to or less than 1 mm, the opposite surfaces were parallelly polished, and the average light transmittance in the wavelength range from 400 nm to 800 nm was measured using a Hitachi U-4100 spectrophotometer.

The samples were processed to have a thickness equal to or less than 1 mm, the opposite surfaces were parallelly polished, and the light transmittance at a wavelength of 550 nm was measured using the Hitachi U-4100 spectrophotometer.

[Depth of Ion Exchange Layer]

The depth of the ion exchange layer was measured using a SLP-2000 surface stress meter.

As the conditions for the measurement, the refractive index of the samples was 1.56, and the photo-elastic constant of the samples was 29 (nm/cm)/MPa.

[Surface Stress]

The surface stress was measured using the SLP-2000 surface stress meter.

As the conditions for the measurement, the refractive index of the samples was 1.56, and the photo-elastic constant of the samples was 29 (nm/cm)/MPa.

[Drop Resistance]

The drop resistance was measured using a WH-2101 directional drop testing machine. A 2D microcrystalline glass article was loaded with two additional glass articles of the same specification (each weighing 20 g), and the base of the machine was covered with 60-80 mesh sandpaper. The sample was dropped freely from a specified height and directly impact the sandpaper. The height from which the sample was dropped without breaking under the impact was defined as the drop resistance. Specifically, the testing started from a height of 600 mm. If the sample was not broken, the height was increased stepwise to 700 mm, 800 mm, 900 mm, 1000 mm and above. For the examples testing "drop resistance", the test samples were the microcrystalline glass articles. In these examples, the test result recorded as 1000 mm indicates that the microcrystalline glass article with the load was not broken and withstood the impact when dropped from a height of 1000 mm. The maximum testing height of the WH-2101 drop testing machine was 2000 mm.

[Ball Drop Test Height]

A microcrystalline glass article sample with dimensions of 145 mm×67 mm×0.7 mm was placed on a holding fixture. A steel ball weighing 132 g was dropped from a specified height onto the center of the sample. The maximum height from which the steel ball can be dropped without breaking the sample was defined as the ball drop test height. Specifically, the testing started from a height of 400 mm, with one drop per height. If the sample was not broken, the height was increased by 100 mm each time until the sample was broken. For the examples testing "the ball drop test height", the test samples were the microcrystalline glass articles. The test result recorded as 1700 mm indicates that the microcrystalline glass article was not broken and withstood the impact when the steel ball was dropped from a height of 1700 mm. In the present application, the ball drop test height is also referred to as the ball drop height.

[Fracture Toughness]

The fracture toughness was tested by directly measuring the size of cracks extending from an indentation. The sample with dimensions of 2 mm×4 mm×20 mm was chamfered, ground, and polished. After the sample preparation, a Vickers hardness indenter applied a force of 49 N to the sample for 30 seconds to create an indentation. The fracture toughness was then measured using the three-point flexural method.

[Four-Point Bending Strength]

The four-point bending strength was evaluated using a CMT6502 microcomputer-controlled electronic universal testing machine. The sample with a thickness equal to or less than 1 mm (preferably with a thickness of 0.7 mm) was subjected to the test according to standard ASTM C158-2002. In the present application, the four-point bending strength is also referred to as the bending strength.

[Vickers Hardness]

The Vickers hardness was calculated by dividing a load (N) by a surface area ($mm^2$) of an indentation created by the load. The load was applied on the test surface by a diamond pyramid indenter with an included angle of 136° between opposite faces, which created a pyramid-shaped indentation on the test surface, and the surface area was calculated from the length of the indentation. The load was 100 N and applied for 15 seconds. In the present application, the Vickers hardness is also referred to as hardness.

[Compressive Strength]

The compressive strength was measured using a CMT6502 microcomputer-controlled electronic universal testing machine. A microcrystalline glass article sample with dimensions of 145 mm×67 mm×0.7 mm was placed on a holding fixture. The compression rod with a mushroom head design and a diameter of 10 mm was used. The compression speed was 5 mm/min until the sample was broken. The fixture was calibrated before testing, and the test point was located at the center of the sample. The test was performed until the microcrystalline glass article sample was broken under compression, and the pressure (N) at which the sample broke was recorded. For the examples testing "compressive strength", the test samples were the microcrystalline glass articles. In these examples, the test result recorded as 500 N indicates that the microcrystalline glass article withstood a maximum compressive force of 500 N before breaking.

[|B| Value]

The B value was measured using a Minolta CM-700d. The specified thickness of the sample was equal to or less than 1 mm. The instrument was subject to zero calibration and white calibration using the accompanying long and short tubes, respectively. After calibration, an air test was conducted with the long tube to ensure instrument stability and calibration reliability (B≤0.05). Once the instrument was confirmed to be calibrated correctly, the sample was placed on the zero-point long tube for testing.

The |B| value is the absolute value of the B value.

[Young's Modulus]

The longitudinal and transverse wave velocities of ultrasound wave traveling through the sample were measured, and the Young's modulus (E) was calculated using the following formula:

$$E = \frac{4G^2 - 3GV_T^2\rho}{G - V_T^2\rho}$$

$$G = V_S^2 \, \rho$$

in which, E is Young's modulus, Pa;
G is shear modulus, Pa;
$V_T$ is transverse wave velocity, m/s;
$V_S$ is longitudinal wave velocity, m/s;
$\rho$ is density of glass, g/cm$^3$.

The microcrystalline glass article having the spinel crystalline phase according to the present application possesses the following properties:

1) In some embodiments, the crystal grain size of the microcrystalline glass article having the spinel crystalline phase is equal to or less than 60 nm, preferably equal to or less than 45 nm, and more preferably in a range from 10 nm to 30 nm.

2) In some embodiments, the depth of the ion exchange layer of the microcrystalline glass article having the spinel crystalline phase is equal to or greater than 75 $\mu$m, preferably in a range from 80 $\mu$m to 150 $\mu$m, and more preferably in a range from 100 $\mu$m to 125 $\mu$m.

3) In some embodiments, the surface stress of the microcrystalline glass article having the spinel crystalline phase is equal to or greater than 200 MPa, preferably in a range from 250 MPa to 400 MPa, and more preferably in a range from 300 MPa to 400 MPa.

4) In some embodiments, the ball drop test height of the microcrystalline glass article having the spinel crystalline phase is equal to or greater than 1000 mm, preferably equal to or greater than 1200 mm, and more preferably equal to or greater than 1500 mm.

5) In some embodiments, the drop resistance of the microcrystalline glass article having the spinel crystalline phase is equal to or greater than 1200 mm, preferably equal to or greater than 1300 mm, and more preferably equal to or greater than 1400 mm.

6) In some embodiments, the fracture toughness of the microcrystalline glass article having the spinel crystalline phase is equal to or greater than 1.0 MPa·m$^{1/2}$, preferably equal to or greater than 1.2 MPa·m$^{1/2}$, and more preferably in a range from 1.2 MPa·m$^{1/2}$ to 1.6 MPa·m$^{1/2}$.

7) In some embodiments, the four-point bending strength of the microcrystalline glass article having the spinel crystalline phase is equal to or greater than 500 MPa, preferably equal to or greater than 600 MPa, and more preferably in a range from 700 MPa to 1000 MPa.

8) In some embodiments, the compressive strength of the microcrystalline glass article having the spinel crystalline phase is equal to or greater than 400 N, preferably in a range from 400 N to 550 N, and more preferably in a range from 450 N to 550 N.

9) In some embodiments, the Vickers hardness ($H_v$) of the microcrystalline glass article having the spinel crystalline phase is equal to or greater than 650 kgf/mm$^2$, preferably equal to or greater than 660 kgf/mm$^2$, and more preferably in a range from 680 kgf/mm$^2$ to 750 kgf/mm$^2$.

10) In some embodiments, the haze of the microcrystalline glass article having the spinel crystalline phase with a thickness equal to or less than 1 mm is equal to or less than 0.3%, preferably equal to or less than 0.25%, and more preferably in a range from 0.05% to 0.2%. The thickness is preferably in a range from 0.2 mm to 1 mm, more preferably in a range from 0.3 mm to 0.9 mm, still more preferably in a range from 0.5 mm to 0.8 mm, and even more preferably 0.55 mm, or 0.6 mm, or 0.68 mm, or 0.7 mm, or 0.75 mm.

11) In some embodiments, the average light transmittance of the microcrystalline glass article having the spinel crystalline phase with a thickness equal to or less than 1 mm, in a wavelength range from 400 nm to 800 nm, is equal to or greater than 87.0%, preferably equal to or greater than 88.5%, and more preferably equal to or greater than 89.5%. The thickness is preferably in a range from 0.2 mm to 1 mm, more preferably in a range from 0.3 mm to 0.9 mm, still more preferably in a range from 0.5 mm to 0.8 mm, and even more preferably 0.55 mm, or 0.6 mm, or 0.68 mm, or 0.7 mm, or 0.75 mm.

12) In some embodiments, the light transmittance of the microcrystalline glass article having the spinel crystalline phase with a thickness equal to or less than 1 mm, at a wavelength of 550 nm, is equal to or greater than 87.0%, preferably equal to or greater than 88.0%, and more preferably equal to or greater than 89.0%. The thickness is preferably in a range from 0.2 mm to 1 mm, more preferably in a range from 0.3 mm to 0.9 mm, still more preferably in a range from 0.5 mm to 0.8 mm, and even more preferably 0.55 mm, or 0.6 mm, or 0.68 mm, or 0.7 mm, or 0.75 mm.

13) In some embodiments, the average |B| value of the microcrystalline glass article having the spinel crystalline phase with a thickness equal to or less than 1 mm, for light in a wavelength range from 400 nm 800 nm, is equal to or less than 1.0, preferably equal to or less than 0.8, and more preferably in a range from 0.3 to 0.6. The thickness is preferably in a range from 0.2 mm to 1 mm, more preferably in a range from 0.3 mm to 0.9 mm, still more preferably in a range from 0.5 mm to 0.8 mm, and even more preferably 0.55 mm, or 0.6 mm, or 0.68 mm, or 0.7 mm, or 0.75 mm.

The microcrystalline glass having the spinel crystalline phase according to the present application possesses the following properties:

1) In some embodiments, the crystal grain size of the microcrystalline glass having the spinel crystalline phase is equal to or less than 60 nm, preferably equal to or less than 45 nm, and more preferably in a range from 10 nm to 30 nm.

2) In some embodiments, the haze of the microcrystalline glass having the spinel crystalline phase with a thickness equal to or less than 1 mm is equal to or less than 0.3%, preferably equal to or less than 0.25%, and more preferably in a range from 0.05% to 0.2%. The thickness is preferably in a range from 0.2 mm to 1 mm, more preferably in a range from 0.3 mm to 0.9 mm, still more preferably in a range from 0.5 mm to 0.8 mm, and even more preferably 0.55 mm, or 0.6 mm, or 0.68 mm, or 0.7 mm, or 0.75 mm.

3) In some embodiments, the average light transmittance of the microcrystalline glass having the spinel crystalline phase with a thickness equal to or less than 1 mm, in a wavelength range from 400 nm to 800 nm, is equal to or greater than 87.0%, preferably equal to or greater than 88.5%, and more preferably equal to or greater than 89.5%. The thickness is preferably in a range from 0.2 mm to 1 mm, more preferably in a range from 0.3 mm to 0.9 mm, still more preferably in a range from 0.5 mm to 0.8 mm, and even more preferably 0.55 mm, or 0.6 mm, or 0.68 mm, or 0.7 mm, or 0.75 mm.

4) In some embodiments, the light transmittance of the microcrystalline glass having the spinel crystalline phase with a thickness equal to or less than 1 mm, at a wavelength of 550 nm, is equal to or greater than 87.0%, preferably equal to or greater than 88.0%, and more preferably equal to or greater than 89.0%. The thickness is preferably in a range from 0.2 mm to 1 mm, more preferably in a range from 0.3 mm to 0.9 mm, still more preferably in a range from 0.5 mm to 0.8 mm, and even more preferably 0.55 mm, or 0.6 mm, or 0.68 mm, or 0.7 mm, or 0.75 mm.

5) In some embodiments, the average |B| value of the microcrystalline glass having the spinel crystalline phase with a thickness equal to or less than 1 mm, for light in the wavelength range from 400 nm 800 nm, is equal to or less than 1.0, preferably equal to or less than 0.8, and more preferably in a range from 0.3 to 0.6. The thickness is preferably in a range from 0.2 mm to 1 mm, more preferably in a range from 0.3 mm to 0.9 mm, still more preferably in a range from 0.5 mm to 0.8 mm, and even more preferably 0.55 mm, or 0.6 mm, or 0.68 mm, or 0.7 mm, or 0.75 mm.

6) In some embodiments, the Young's modulus (E) of the microcrystalline glass having the spinel crystalline phase is in a range from 80 GPa to 110 GPa, preferably in a range from 85 GPa to 105 GPa, and more preferably in a range from 90 GPa to 105 GPa.

7) In some embodiments, the Vickers hardness ($H_v$) of the microcrystalline glass having the spinel crystalline phase is equal to or greater than 550 kgf/mm$^2$, preferably equal to or greater than 580 kgf/mm$^2$, and more preferably in a range from 600 kgf/mm$^2$ to 650 kgf/mm$^2$.

In the present application, the microcrystalline glass, the microcrystalline glass article, the matrix glass, the shaped glass body, and the shaped microcrystalline glass body, due to their excellent performance as described above, can be widely used for manufacturing glass cover plates or glass elements. Furthermore, the microcrystalline glass, the microcrystalline glass article, the matrix glass, the shaped glass body, and the shaped microcrystalline glass body can be applied in electronic devices or display devices, such as mobile phones, watches, computers, touch display screens, etc., or used to manufacture protective glass for mobile phones, smart phones, tablet computers, laptops, PDAs, televisions, personal computers, MTA machines, or industrial displays, or used to manufacture touchscreens, protective windows, car windows, train windows, aerospace mechanical windows, touchscreen protective glass, or used to manufacture hard disk substrates or solar cell substrates, or used to manufacture white goods, such as refrigerator components or kitchenware.

Examples

In order to further clearly explain and illustrate the technical solutions of the present application, the following non-limiting examples are provided. In the examples of the present application, although every effort has been made to ensure the accuracy of numerical values (e.g., amounts, temperatures, etc.), some experimental errors and deviations should be considered. The components themselves are expressed in weight percentages based on respective oxides and have been normalized to 100%.

<Examples of microcrystalline glass having spinel crystalline phase>

In these examples, the microcrystalline glass having a spinel crystalline phase including the components shown in Tables 1 to 4 were prepared using the preparation methods described above. Furthermore, the properties of the microcrystalline glass were measured using the testing methods described in the present application, and the measurement results are shown in Tables 1 to 4. In the following examples, the thickness of the test samples for measuring the haze, the average light transmittance in a wavelength range from 400 nm to 800 nm, the light transmittance at a wavelength of 550 nm, and the average |B| value for light in a wavelength range from 400 nm to 800 nm was 0.7 mm.

Table 1

| Example | 1# | 2# | 3# | 4# | 5# | 6# |
|---|---|---|---|---|---|---|
| $SiO_2$ | 48 | 46 | 49 | 46 | 48 | 54 |
| $Al_2O_3$ | 23 | 27 | 18 | 23 | 19 | 22 |
| ZnO | 15 | 11 | 12 | 18 | 11 | 10 |
| $Li_2O$ | 3 | 5 | 5 | 2 | 2 | 2 |
| $TiO_2$ | 4 | 4 | 4 | 4 | 2 | 2 |
| MgO | 2 | 2 | 6 | 1 | 3 | 2 |
| $ZrO_2$ | 1.5 | 1.5 | 2 | 2 | 4 | 2 |
| $P_2O_5$ | 2 | 2 | 2 | 2 | 2.5 | 2 |
| $K_2O$ | 0 | 0 | 1 | 0 | 0 | 0 |
| $Na_2O$ | 1 | 0 | 0 | 1 | 1 | 1 |
| CaO+BaO+SrO | 0 | 1 | 0 | 0 | 2 | 2 |
| $Y_2O_3$ | 0 | 0 | 0 | 0 | 5 | 0 |
| $B_2O_3$ | 0 | 0 | 0 | 0 | 0 | 0 |
| $Sb_2O_3$ | 0.50 | 0.5 | 1 | 1 | 0.5 | 1 |
| Total | 100 | 100 | 100 | 100 | 100 | 100 |
| $SiO_2/Al_2O_3$ | 2.09 | 1.7 | 2.72 | 2 | 2.53 | 2.45 |
| $Al_2O_3$+ZnO | 38 | 38 | 30 | 41 | 30 | 32 |
| $Al_2O_3$/ZnO | 1.53 | 2.45 | 1.5 | 1.28 | 1.73 | 2.2 |
| $Li_2O/TiO_2$ | 0.75 | 1.25 | 1.25 | 0.5 | 1 | 1 |
| $P_2O_5/ZrO_2$ | 1.33 | 1.33 | 1 | 1 | 0.63 | 1 |
| $(TiO_2+ZnO)/Al_2O_3$ | 0.83 | 0.56 | 0.89 | 0.96 | 0.68 | 0.55 |
| $(Al_2O_3+Li_2O)/P_2O_5$ | 13 | 16 | 11.5 | 12.5 | 8.4 | 12 |
| $(Li_2O+MgO)/TiO_2$ | 1.25 | 1.75 | 2.75 | 0.75 | 2.5 | 2 |
| $(K_2O+Na_2O)/ZnO$ | 0.07 | 0 | 0.08 | 0.06 | 0.09 | 0.1 |
| $(SiO_2+Na_2O)/ZnO$ | 3.27 | 4.18 | 4.08 | 2.61 | 4.45 | 5.5 |
| $Al_2O_3/(MgO+TiO_2)$ | 3.83 | 4.5 | 1.8 | 4.6 | 3.8 | 5.5 |
| $P_2O_5+ZrO_2$ | 3.5 | 3.5 | 4 | 4 | 6.5 | 4 |
| Crystalline phase content (%) | 41.1 | 35.2 | 33.1 | 44.1 | 28.0 | 31.5 |
| Type of crystalline phase | $ZnAl_2O_4$ | $ZnAl_2O_4$ | Quartz solid solution, $ZnAl_2O_4$ | $ZnAl_2O_4$ | Quartz solid solution, $ZnAl_2O_4$ | $ZnAl_2O_4$ |
| Crystal grain size (nm) | 20 | 21 | 34 | 15 | 39 | 35 |
| Haze (%) | 0.2 | 0.1 | 0.17 | 0.28 | 0.21 | 0.09 |
| |B| value | 0.7 | 0.4 | 0.4 | 1.0 | 0.5 | 0.5 |

(continued)

| Type of crystalline phase | ZnAl$_2$O$_4$ | ZnAl$_2$O$_4$ | Quartz solid solution, ZnAl$_2$O$_4$ | ZnAl$_2$O$_4$ | Quartz solid solution, ZnAl$_2$O$_4$ | ZnAl$_2$O$_4$ |
|---|---|---|---|---|---|---|
| Average light transmittance in wavelength from 400 nm to 800 nm (%) | 89.5 | 90.2 | 89.9 | 89.1 | 89.6 | 90.4 |
| Light transmittance at wavelength of 550 nm (%) | 89.3 | 90.2 | 89.9 | 88.8 | 89.5 | 90.5 |
| Vickers hardness (Kgf/mm$^2$) | 605 | 603 | 572 | 620 | 552 | 551 |
| Young's modulus (GPa) | 98 | 91 | 93 | 101 | 90 | 90 |

Table 2

| Example | 7# | 8# | 9# | 10# | 11# | 12# |
|---|---|---|---|---|---|---|
| SiO$_2$ | 50 | 48 | 48 | 48 | 48 | 49 |
| Al$_2$O$_3$ | 23 | 22 | 23 | 21 | 21 | 19 |
| ZnO | 10 | 15 | 13 | 15 | 13 | 12.5 |
| Li$_2$O | 2 | 3 | 3 | 3 | 4 | 3 |
| TiO$_2$ | 2 | 4 | 4 | 3 | 6 | 5 |
| MgO | 2 | 2 | 2 | 2 | 3 | 3 |
| ZrO$_2$ | 3 | 1.5 | 2.5 | 1.5 | 1 | 1 |
| P$_2$O$_5$ | 2 | 2 | 2 | 2 | 1 | 0.5 |
| K$_2$O | 2 | 0 | 0 | 1 | 0 | 0 |
| Na$_2$O | 0 | 1 | 0.5 | 0 | 1 | 5 |
| CaO+BaO+SrO | 3 | 0 | 1 | 3 | 1 | 1 |
| Y$_2$O$_3$ | 0 | 1 | 0 | 0 | 0 | 0 |
| B$_2$O$_3$ | 0 | 0 | 1 | 0 | 0 | 0 |
| Sb$_2$O$_3$ | 1 | 0.5 | 0 | 0.5 | 1 | 1 |
| Total | 100 | 100 | 100 | 100 | 100 | 100 |
| SiO$_2$/Al$_2$O$_3$ | 2.17 | 2.18 | 2.09 | 2.29 | 2.29 | 2.58 |
| Al$_2$O$_3$+ZnO | 33 | 37 | 36 | 36 | 34 | 31.5 |
| Al$_2$O$_3$/ZnO | 2.3 | 1.47 | 1.77 | 1.4 | 1.62 | 1.52 |
| Li$_2$O/TiO$_2$ | 1 | 0.75 | 0.75 | 1 | 0.67 | 0.6 |
| P$_2$O$_5$/ZrO$_2$ | 0.67 | 1.33 | 0.8 | 1.33 | 1 | 0.5 |
| (TiO$_2$+ZnO)/Al$_2$O$_3$ | 0.52 | 0.86 | 0.74 | 0.86 | 0.9 | 0.92 |
| (Al$_2$O$_3$+Li$_2$O)/P$_2$O$_5$ | 12.5 | 12.5 | 13 | 12 | 25 | 44 |
| (Li$_2$O+MgO)/TiO$_2$ | 2 | 1.25 | 1.25 | 1.67 | 1.17 | 1.2 |
| (K$_2$O+Na$_2$O)/ZnO | 0.2 | 0.07 | 0.04 | 0.07 | 0.08 | 0.4 |
| (SiO$_2$+Na$_2$O)/ZnO | 5 | 3.27 | 3.73 | 3.2 | 3.77 | 4.32 |
| Al$_2$O$_3$/(MgO+TiO$_2$) | 5.75 | 3.67 | 3.83 | 4.2 | 2.33 | 2.38 |
| P$_2$O$_5$+ZrO$_2$ | 5 | 3.5 | 4.5 | 3.5 | 2 | 1.5 |
| Crystalline phase content (%) | 33.2 | 40 | 38.4 | 39.1 | 37.5 | 37 |

(continued)

| Example | 7# | 8# | 9# | 10# | 11# | 12# |
|---|---|---|---|---|---|---|
| Type of crystalline phase | $ZnAl_2O_4$ | $ZnAl_2O_4$ | $ZnAl_2O_4$ | $ZnAl_2O_4$ | Quartz solid solution, $ZnAl_2O_4$ | Quartz solid solution, $ZnAl_2O_4$ |
| Crystal grain size(nm) | 30 | 20 | 15 | 32 | 36 | 44 |
| Haze (%) | 0.12 | 0.22 | 0.18 | 0.17 | 0.25 | 0.25 |
| \|B\| value | 0.5 | 0.7 | 0.7 | 0.5 | 0.8 | 0.8 |
| Average light transmittance in wavelength from 400 nm to 800 nm (%) | 90.3 | 89.5 | 89.7 | 89.7 | 89.3 | 89.3 |
| Light transmittance at wavelength of 550 nm (%) | 90.4 | 89.4 | 89.5 | 89.5 | 89.1 | 89.1 |
| Vickers hardness (Kgf/mm$^2$) | 579 | 607 | 604 | 606 | 594 | 593 |
| Young's modulus (GPa) | 90 | 98 | 95 | 97 | 95 | 89 |

Table 3

| Example | 13# | 14# | 15# | 16# | 17# | 18# |
|---|---|---|---|---|---|---|
| $SiO_2$ | 51 | 50 | 50 | 52 | 48 | 50 |
| $Al_2O_3$ | 19 | 21 | 22 | 24 | 23 | 22 |
| ZnO | 12.5 | 10 | 11 | 12 | 13 | 11 |
| $Li_2O$ | 4 | 2 | 1 | 2 | 3 | 2 |
| $TiO_2$ | 5 | 2 | 2 | 3 | 4 | 2 |
| MgO | 3 | 2 | 5 | 2 | 1 | 3 |
| $ZrO_2$ | 1 | 3 | 3 | 1 | 2 | 4 |
| $P_2O_5$ | 1 | 2 | 2 | 2 | 3 | 2.5 |
| $K_2O$ | 0 | 0 | 0 | 0 | 0 | 0 |
| $Na_2O$ | 2 | 1 | 1.5 | 1 | 0 | 1 |
| CaO+BaO+SrO | 1 | 3 | 2 | 1 | 1 | 2 |
| $Y_2O_3$ | 0 | 3 | 0 | 0 | 0 | 0 |
| $B_2O_3$ | 0 | 0 | 0 | 0 | 1.5 | 0 |
| $Sb_2O_3$ | 0.5 | 1 | 0.5 | 0 | 0.5 | 0.5 |
| Total | 100 | 100 | 100 | 100 | 100 | 100 |
| $SiO_2/Al_2O_3$ | 2.68 | 2.38 | 2.27 | 2.17 | 2.09 | 2.27 |
| $Al_2O_3$+ZnO | 31.5 | 31 | 33 | 36 | 36 | 33 |
| $Al_2O_3$/ZnO | 1.52 | 2.1 | 2 | 2 | 1.77 | 2 |
| $Li_2O/TiO_2$ | 0.8 | 1 | 0.5 | 0.67 | 0.75 | 1 |
| $P_2O_5/ZrO_2$ | 1 | 0.67 | 0.67 | 2 | 1.5 | 0.63 |
| $(TiO_2+ZnO)/Al_2O_3$ | 0.92 | 0.57 | 0.59 | 0.63 | 0.74 | 0.59 |
| $(Al_2O_3+Li_2O)/P_2O_5$ | 23 | 11.5 | 11.5 | 13 | 8.67 | 9.6 |
| $(Li_2O+MgO)/TiO_2$ | 1.4 | 2 | 3 | 1.33 | 1 | 2.5 |
| $(K_2O+Na_2O)/ZnO$ | 0.16 | 0.1 | 0.14 | 0.08 | 0 | 0.09 |
| $(SiO_2+Na_2O)/ZnO$ | 4.24 | 5.1 | 4.68 | 4.42 | 3.69 | 4.64 |

(continued)

| Example | 13# | 14# | 15# | 16# | 17# | 18# |
|---|---|---|---|---|---|---|
| $Al_2O_3/(MgO+TiO_2)$ | 2.38 | 5.25 | 3.14 | 4.8 | 4.6 | 4.4 |
| $P_2O_5+ZrO_2$ | 2 | 5 | 5 | 3 | 5 | 6.5 |
| Crystalline phase content (%) | 37.5 | 31 | 30.8 | 35.2 | 38.2 | 30.9 |
| Type of crystalline phase | Quartz solid solution, $ZnAl_2O_4$ | $ZnAl_2O_4$ | Quartz solid solution, $ZnAl_2O_4$ | $ZnAl_2O_4$ | $ZnAl_2O_4$ | Quartz solid solution, $ZnAl_2O_4$ |
| Crystal grain size (nm) | 41 | 30 | 43 | 35 | 16 | 38 |
| Haze (%) | 0.19 | 0.09 | 0.18 | 0.11 | 0.17 | 0.23 |
| \|B\| **value** | 0.6 | 0.5 | 1.0 | 0.8 | 0.7 | 0.5 |
| Average light transmittance in wavelength from 400 nm to 800 nm (%) | 89.8 | 90.2 | 89.8 | 90.1 | 89.7 | 89.5 |
| Light transmittance at wavelength of 550 nm (%) | 89.8 | 90.3 | 89.7 | 90.2 | 89.6 | 89.4 |
| Vickers hardness (Kgf/mm$^2$) | 595 | 580 | 550 | 597 | 601 | 551 |
| Young's modulus (GPa) | 96 | 90 | 89 | 93 | 94 | 88 |

Table 4

| Example | 19# | 20# | 21# | 22# | 23# | 24# |
|---|---|---|---|---|---|---|
| $SiO_2$ | 49 | 49 | 48 | 51 | 49 | 48 |
| $Al_2O_3$ | 22 | 22 | 22 | 22 | 25 | 25 |
| $ZnO$ | 11 | 17 | 13 | 11.5 | 17 | 11 |
| $Li_2O$ | 2 | 3 | 3 | 6 | 3 | 5 |
| $TiO_2$ | 3 | 3 | 4 | 4 | 3 | 4 |
| $MgO$ | 2 | 2 | 2 | 3 | 1 | 2 |
| $ZrO_2$ | 2 | 1.5 | 1.5 | 0.5 | 0.5 | 1.5 |
| $P_2O_5$ | 3.5 | 2 | 2 | 2 | 1 | 2 |
| $K_2O$ | 0 | 0 | 0 | 0 | 0 | 0 |
| $Na_2O$ | 3 | 0 | 0 | 0 | 0 | 0 |
| $CaO+BaO+SrO$ | 2 | 0 | 1 | 0 | 0 | 1 |
| $Y_2O_3$ | 0 | 0 | 0 | 0 | 0 | 0 |
| $B_2O_3$ | 0 | 0 | 3 | 0 | 0 | 0 |
| $Sb_2O_3$ | 0.5 | 0.5 | 0.5 | 0 | 0.5 | 0.5 |
| Total | 100 | 100 | 100 | 100 | 100 | 100 |
| $SiO_2/Al_2O_3$ | 2.23 | 2.23 | 2.18 | 2.32 | 1.96 | 1.92 |
| $Al_2O_3+ZnO$ | 33 | 39 | 35 | 33.5 | 42 | 36 |
| $Al_2O_3/ZnO$ | 2 | 1.29 | 1.69 | 1.91 | 1.47 | 2.27 |
| $Li_2O/TiO_2$ | 0.67 | 1 | 0.75 | 1.5 | 1 | 1.25 |
| $P_2O_5/ZrO_2$ | 1.75 | 1.33 | 1.33 | 4 | 2 | 1.33 |
| $(TiO_2+ZnO)/Al_2O_3$ | 0.64 | 0.91 | 0.77 | 0.7 | 0.8 | 0.6 |
| $(Al_2O_3+Li_2O)/P_2O_5$ | 6.86 | 12.5 | 12.5 | 14 | 28 | 15 |

(continued)

| Example | 19# | 20# | 21# | 22# | 23# | 24# |
|---|---|---|---|---|---|---|
| $(Li_2O+MgO)/TiO_2$ | 1.33 | 1.67 | 1.25 | 2.25 | 1.33 | 1.75 |
| $(K_2O+Na_2O)/ZnO$ | 0.27 | 0 | 0 | 0 | 0 | 0 |
| $(SiO_2+Na_2O)/ZnO$ | 4.73 | 2.88 | 3.69 | 4.43 | 2.88 | 4.36 |
| $Al_2O_3/(MgO+TiO_2)$ | 4.4 | 4.4 | 3.67 | 3.14 | 6.25 | 4.17 |
| $P_2O_5+ZrO_2$ | 5.5 | 3.5 | 3.5 | 2.5 | 1.5 | 3.5 |
| Crystalline phase content (%) | 35.1 | 39.5 | 37.3 | 34 | 42 | 35.1 |
| Type of crystalline phase | $ZnAl_2O_4$ | $ZnAl_2O_4$ | $ZnAl_2O_4$ | quartz solid solution, $ZnAl_2O_4$ | $ZnAl_2O_4$ | $ZnAl_2O_4$ |
| Crystal grain size (nm) | 36 | 32 | 20 | 45 | 39 | 18 |
| Haze (%) | 0.12 | 0.17 | 0.13 | 0.21 | 0.24 | 0.12 |
| \|B\| value | 0.8 | 0.5 | 0.7 | 0.3 | 0.5 | 0.4 |
| Average light transmittance in wavelength from 400 nm to 800 nm (%) | 89.8 | 89.7 | 90.0 | 89.5 | 89.5 | 90.2 |
| Light transmittance at wavelength of 550 nm (%) | 89.8 | 89.7 | 90.1 | 89.3 | 89.3 | 90.3 |
| Vickers hardness (Kgf/mm$^2$) | 590 | 604 | 603 | 578 | 604 | 600 |
| Young's modulus (GPa) | 92 | 98 | 94 | 94 | 100 | 92 |

<Examples of microcrystalline glass article having spinel crystalline phase>

In these examples, the microcrystalline glass articles having a spinel crystalline phase including the components shown in Tables 5 to 8 were prepared using the preparation methods described above. Furthermore, the properties of the microcrystalline glass article was measured using the testing methods described in the present application, and the measurement results are shown in Tables 5 to 8. In the following examples, the thickness of the test samples for measuring the haze, the average light transmittance in a wavelength range from 400 nm to 800 nm, the light transmittance at a wavelength of 550 nm, and the average \|B\| value for light in a wavelength range from 400 nm to 800 nm was 0.7 mm.

Table 5

| Example | 1# | 2# | 3# | 4# | 5# | 6# |
|---|---|---|---|---|---|---|
| $SiO_2$ | 48 | 46 | 49 | 46 | 48 | 54 |
| $Al_2O_3$ | 23 | 27 | 18 | 23 | 19 | 22 |
| ZnO | 15 | 11 | 12 | 18 | 11 | 10 |
| $Li_2O$ | 3 | 5 | 5 | 2 | 2 | 2 |
| $TiO_2$ | 4 | 4 | 4 | 4 | 2 | 2 |
| MgO | 2 | 2 | 6 | 1 | 3 | 2 |
| $ZrO_2$ | 1.5 | 1.5 | 2 | 2 | 4 | 2 |
| $P_2O_5$ | 2 | 2 | 2 | 2 | 2.5 | 2 |
| $K_2O$ | 0 | 0 | 1 | 0 | 0 | 0 |
| $Na_2O$ | 1 | 0 | 0 | 1 | 1 | 1 |
| CaO+BaO+SrO | 0 | 1 | 0 | 0 | 2 | 2 |
| $Y_2O_3$ | 0 | 0 | 0 | 0 | 5 | 0 |
| $B_2O_3$ | 0 | 0 | 0 | 0 | 0 | 0 |

(continued)

| Example | 1# | 2# | 3# | 4# | 5# | 6# |
|---|---|---|---|---|---|---|
| $Sb_2O_3$ | 0.50 | 0.5 | 1 | 1 | 0.5 | 1 |
| Total | 100 | 100 | 100 | 100 | 100 | 100 |
| $SiO_2/Al_2O_3$ | 2.09 | 1.7 | 2.72 | 2 | 2.53 | 2.45 |
| $Al_2O_3+ZnO$ | 38 | 38 | 30 | 41 | 30 | 32 |
| $Al_2O_3/ZnO$ | 1.53 | 2.45 | 1.5 | 1.28 | 1.73 | 2.2 |
| $Li_2O/TiO_2$ | 0.75 | 1.25 | 1.25 | 0.5 | 1 | 1 |
| $P_2O_5/ZrO_2$ | 1.33 | 1.33 | 1 | 1 | 0.63 | 1 |
| $(TiO_2+ZnO)/Al_2O_3$ | 0.83 | 0.56 | 0.89 | 0.96 | 0.68 | 0.55 |
| $(Al_2O_3+Li_2O)/P_2O_5$ | 13 | 16 | 11.5 | 12.5 | 8.4 | 12 |
| $(Li_2O+MgO)/TiO_2$ | 1.25 | 1.75 | 2.75 | 0.75 | 2.5 | 2 |
| $(K_2O+Na_2O)/ZnO$ | 0.07 | 0 | 0.08 | 0.06 | 0.09 | 0.1 |
| $(SiO_2+Na_2O)/ZnO$ | 3.27 | 4.18 | 4.08 | 2.61 | 4.45 | 5.5 |
| $Al_2O_3/(MgO+TiO_2)$ | 3.83 | 4.5 | 1.8 | 4.6 | 3.8 | 5.5 |
| $P_2O_5+ZrO_2$ | 3.5 | 3.5 | 4 | 4 | 6.5 | 4 |
| Crystalline phase content (%) | 41.1 | 35.2 | 33.1 | 44.1 | 28.0 | 31.5 |
| Type of crystalline phase | $ZnAl_2O_4$ | $ZnAl_2O_4$ | Quartz solid solution, $ZnAl_2O_4$ | $ZnAl_2O_4$ | Quartz solid solution, $ZnAl_2O_4$ | $ZnAl_2O_4$ |
| Crystal grain size (nm) | 20 | 21 | 34 | 15 | 39 | 35 |
| Surface stress (Mpa) | 298 | 379 | 339 | 232 | 236 | 226 |
| Depth of ion exchange layer ($\mu$m) | 95 | 122 | 91 | 78 | 94 | 103 |
| Ball drop test height (mm) | 1600 | 1500 | 1400 | 1600 | 1400 | 1500 |
| Drop resistance (mm) | 1500 | 1900 | 1700 | 1900 | 1500 | 1500 |
| Fracture toughness (Mpa•m$^{1/2}$) | 1.3 | 1.6 | 1.2 | 1.0 | 1.3 | 1.4 |
| Four-point bending strength (Mpa) | 742 | 950 | 858 | 579 | 580 | 570 |
| Compressive strength (N) | 537 | 510 | 418 | 404 | 412 | 433 |
| Vickers hardness (Kgf/mm$^2$) | 719 | 715 | 685 | 740.0 | 654 | 660 |
| Haze (%) | 0.2 | 0.1 | 0.17 | 0.28 | 0.21 | 0.09 |
| \|B\| value | 0.7 | 0.4 | 0.4 | 1.0 | 0.5 | 0.5 |
| Average light transmittance in wavelength from 400 nm to 800 nm (%) | 89.5 | 90.2 | 89.9 | 89.1 | 89.6 | 90.4 |
| Light transmittance at wavelength of 550 nm (%) | 89.3 | 90.2 | 89.9 | 88.8 | 89.5 | 90.5 |

Table 6

| Example | 7# | 8# | 9# | 10# | 11# | 12# |
|---|---|---|---|---|---|---|
| $SiO_2$ | 50 | 48 | 48 | 48 | 48 | 49 |
| $Al_2O_3$ | 23 | 22 | 23 | 21 | 21 | 19 |
| ZnO | 10 | 15 | 13 | 15 | 13 | 12.5 |

(continued)

| Example | 7# | 8# | 9# | 10# | 11# | 12# |
|---|---|---|---|---|---|---|
| $Li_2O$ | 2 | 3 | 3 | 3 | 4 | 3 |
| $TiO_2$ | 2 | 4 | 4 | 3 | 6 | 5 |
| MgO | 2 | 2 | 2 | 2 | 3 | 3 |
| $ZrO_2$ | 3 | 1.5 | 2.5 | 1.5 | 1 | 1 |
| $P_2O_5$ | 2 | 2 | 2 | 2 | 1 | 0.5 |
| $K_2O$ | 2 | 0 | 0 | 1 | 0 | 0 |
| $Na_2O$ | 0 | 1 | 0.5 | 0 | 1 | 5 |
| CaO+BaO+SrO | 3 | 0 | 1 | 3 | 1 | 1 |
| $Y_2O_3$ | 0 | 1 | 0 | 0 | 0 | 0 |
| $B_2O_3$ | 0 | 0 | 1 | 0 | 0 | 0 |
| $Sb_2O_3$ | 1 | 0.5 | 0 | 0.5 | 1 | 1 |
| Total | 100 | 100 | 100 | 100 | 100 | 100 |
| $SiO_2/Al_2O_3$ | 2.17 | 2.18 | 2.09 | 2.29 | 2.29 | 2.58 |
| $Al_2O_3+ZnO$ | 33 | 37 | 36 | 36 | 34 | 31.5 |
| $Al_2O_3/ZnO$ | 2.3 | 1.47 | 1.77 | 1.4 | 1.62 | 1.52 |
| $Li_2O/TiO_2$ | 1 | 0.75 | 0.75 | 1 | 0.67 | 0.6 |
| $P_2O_5/ZrO_2$ | 0.67 | 1.33 | 0.8 | 1.33 | 1 | 0.5 |
| $(TiO_2+ZnO)/Al_2O_3$ | 0.52 | 0.86 | 0.74 | 0.86 | 0.9 | 0.92 |
| $(Al_2O_3+Li_2O)/P_2O_5$ | 12.5 | 12.5 | 13 | 12 | 25 | 44 |
| $(Li_2O+MgO)/TiO_2$ | 2 | 1.25 | 1.25 | 1.67 | 1.17 | 1.2 |
| $(K_2O+Na_2O)/ZnO$ | 0.2 | 0.07 | 0.04 | 0.07 | 0.08 | 0.4 |
| $(SiO_2+Na_2O)/ZnO$ | 5 | 3.27 | 3.73 | 3.2 | 3.77 | 4.32 |
| $Al_2O_3/(MgO+TiO_2)$ | 5.75 | 3.67 | 3.83 | 4.2 | 2.33 | 2.38 |
| $P_2O_5+ZrO_2$ | 5 | 3.5 | 4.5 | 3.5 | 2 | 1.5 |
| Crystalline phase content (%) | 33.2 | 40 | 38.4 | 39.1 | 37.5 | 37 |
| Type of crystalline phase | $ZnAl_2O_4$ | $ZnAl_2O_4$ | $ZnAl_2O_4$ | $ZnAl_2O_4$ | quartz solid solution, $ZnAl_2O_4$ | quartz solid solution, $ZnAl_2O_4$ |
| Crystal grain size(nm) | 30 | 20 | 15 | 32 | 36 | 44 |
| Surface stress (Mpa) | 231 | 301 | 299 | 294 | 305 | 245 |
| Depth of ion exchange layer ($\mu$m) | 107 | 95 | 106 | 90 | 90 | 88 |
| Ball drop test height (mm) | 1500 | 1600 | 1700 | 1600 | 1500 | 1400 |
| Drop resistance (mm) | 1600 | 1800 | 1800 | 1700 | 1700 | 1600 |
| Fracture toughness ($Mpa \cdot m^{1/2}$) | 1.4 | 1.3 | 1.4 | 1.2 | 1.2 | 1.2 |
| Four-point bending strength (Mpa) | 585 | 759 | 751 | 731 | 769 | 608 |
| Compressive strength (N) | 456 | 537 | 503 | 501 | 461 | 443 |
| Vickers hardness ($Kgf/mm^2$) | 692 | 719 | 710 | 712 | 705 | 703 |

(continued)

| Example | 7# | 8# | 9# | 10# | 11# | 12# |
|---|---|---|---|---|---|---|
| Haze (%) | 0.12 | 0.22 | 0.18 | 0.17 | 0.25 | 0.25 |
| \|B\| value | 0.5 | 0.7 | 0.7 | 0.5 | 0.8 | 0.8 |
| Average light transmittance in wavelength from 400 nm to 800 nm (%) | 90.3 | 89.5 | 89.7 | 89.7 | 89.3 | 89.3 |
| Light transmittance at wavelength of 550 nm (%) | 90.4 | 89.4 | 89.5 | 89.5 | 89.1 | 89.1 |

Table 7

| Example | 13# | 14# | 15# | 16# | 17# | 18# |
|---|---|---|---|---|---|---|
| $SiO_2$ | 51 | 50 | 50 | 52 | 48 | 50 |
| $Al_2O_3$ | 19 | 21 | 22 | 24 | 23 | 22 |
| $ZnO$ | 12.5 | 10 | 11 | 12 | 13 | 11 |
| $Li_2O$ | 4 | 2 | 1 | 2 | 3 | 2 |
| $TiO_2$ | 5 | 2 | 2 | 3 | 4 | 2 |
| $MgO$ | 3 | 2 | 5 | 2 | 1 | 3 |
| $ZrO_2$ | 1 | 3 | 3 | 1 | 2 | 4 |
| $P_2O_5$ | 1 | 2 | 2 | 2 | 3 | 2.5 |
| $K_2O$ | 0 | 0 | 0 | 0 | 0 | 0 |
| $Na_2O$ | 2 | 1 | 1.5 | 1 | 0 | 1 |
| $CaO+BaO+SrO$ | 1 | 3 | 2 | 1 | 1 | 2 |
| $Y_2O_3$ | 0 | 3 | 0 | 0 | 0 | 0 |
| $B_2O_3$ | 0 | 0 | 0 | 0 | 1.5 | 0 |
| $Sb_2O_3$ | 0.5 | 1 | 0.5 | 0 | 0.5 | 0.5 |
| Total | 100 | 100 | 100 | 100 | 100 | 100 |
| $SiO_2/Al_2O_3$ | 2.68 | 2.38 | 2.27 | 2.17 | 2.09 | 2.27 |
| $Al_2O_3+ZnO$ | 31.5 | 31 | 33 | 36 | 36 | 33 |
| $Al_2O_3/ZnO$ | 1.52 | 2.1 | 2 | 2 | 1.77 | 2 |
| $Li_2O/TiO_2$ | 0.8 | 1 | 0.5 | 0.67 | 0.75 | 1 |
| $P_2O_5/ZrO_2$ | 1 | 0.67 | 0.67 | 2 | 1.5 | 0.63 |
| $(TiO_2+ZnO)/Al_2O_3$ | 0.92 | 0.57 | 0.59 | 0.63 | 0.74 | 0.59 |
| $(Al_2O_3+Li_2O)/P_2O_5$ | 23 | 11.5 | 11.5 | 13 | 8.67 | 9.6 |
| $(Li_2O+MgO)/TiO_2$ | 1.4 | 2 | 3 | 1.33 | 1 | 2.5 |
| $(K_2O+Na_2O)/ZnO$ | 0.16 | 0.1 | 0.14 | 0.08 | 0 | 0.09 |
| $(SiO_2+Na_2O)/ZnO$ | 4.24 | 5.1 | 4.68 | 4.42 | 3.69 | 4.64 |
| $Al_2O_3/(MgO+TiO_2)$ | 2.38 | 5.25 | 3.14 | 4.8 | 4.6 | 4.4 |
| $P_2O_5+ZrO_2$ | 2 | 5 | 5 | 3 | 5 | 6.5 |
| Crystalline phase content (%) | 37.5 | 31 | 30.8 | 35.2 | 38.2 | 30.9 |
| Type of crystalline phase | Quartz solid solution, $ZnAl_2O_4$ | $ZnAl_2O_4$ | Quartz solid solution, $ZnAl_2O_4$ | $ZnAl_2O_4$ | $ZnAl_2O_4$ | Quartz solid solution, $ZnAl_2O_4$ |

(continued)

| Example | 13# | 14# | 15# | 16# | 17# | 18# |
|---|---|---|---|---|---|---|
| Crystal grain size (nm) | 41 | 30 | 43 | 35 | 16 | 38 |
| Surface stress (Mpa) | 306 | 252 | 203 | 249 | 238 | 213 |
| Depth of ion exchange layer ($\mu$m) | 88 | 107 | 84 | 98 | 101 | 94 |
| Ball drop test height (mm) | 1500 | 1500 | 1000 | 1500 | 1600 | 1100 |
| Drop resistance (mm) | 1700 | 1600 | 1200 | 1600 | 1700 | 1400 |
| Fracture toughness (Mpa•m$^{1/2}$) | 1.2 | 1.4 | 1.1 | 1.3 | 1.3 | 1.3 |
| Four-point bending strength (Mpa) | 786 | 621 | 502 | 608 | 598 | 530 |
| Compressive strength (N) | 443 | 456 | 432 | 471 | 510 | 412 |
| Vickers hardness (Kgf/mm$^2$) | 703 | 692 | 654 | 707 | 712 | 654 |
| Haze (%) | 0.19 | 0.09 | 0.18 | 0.11 | 0.17 | 0.23 |
| \|B\| value | 0.6 | 0.5 | 1.0 | 0.8 | 0.7 | 0.5 |
| Average light transmittance in wavelength from 400 nm to 800 nm (%) | 89.8 | 90.2 | 89.8 | 90.1 | 89.7 | 89.5 |
| Light transmittance at wavelength of 550 nm (%) | 89.8 | 90.3 | 89.7 | 90.2 | 89.6 | 89.4 |

Table 8

| Example | 19# | 20# | 21# | 22# | 23# | 24# |
|---|---|---|---|---|---|---|
| $SiO_2$ | 49 | 49 | 48 | 51 | 49 | 48 |
| $Al_2O_3$ | 22 | 22 | 22 | 22 | 25 | 25 |
| ZnO | 11 | 17 | 13 | 11.5 | 17 | 11 |
| $Li_2O$ | 2 | 3 | 3 | 6 | 3 | 5 |
| $TiO_2$ | 3 | 3 | 4 | 4 | 3 | 4 |
| MgO | 2 | 2 | 2 | 3 | 1 | 2 |
| $ZrO_2$ | 2 | 1.5 | 1.5 | 0.5 | 0.5 | 1.5 |
| $P_2O_5$ | 3.5 | 2 | 2 | 2 | 1 | 2 |
| $K_2O$ | 0 | 0 | 0 | 0 | 0 | 0 |
| $Na_2O$ | 3 | 0 | 0 | 0 | 0 | 0 |
| CaO+BaO+SrO | 2 | 0 | 1 | 0 | 0 | 1 |
| $Y_2O_3$ | 0 | 0 | 0 | 0 | 0 | 0 |
| $B_2O_3$ | 0 | 0 | 3 | 0 | 0 | 0 |
| $Sb_2O_3$ | 0.5 | 0.5 | 0.5 | 0 | 0.5 | 0.5 |
| Total | 100 | 100 | 100 | 100 | 100 | 100 |
| $SiO_2/Al_2O_3$ | 2.23 | 2.23 | 2.18 | 2.32 | 1.96 | 1.92 |
| $Al_2O_3$+ZnO | 33 | 39 | 35 | 33.5 | 42 | 36 |
| $Al_2O_3$/ZnO | 2 | 1.29 | 1.69 | 1.91 | 1.47 | 2.27 |
| $Li_2O/TiO_2$ | 0.67 | 1 | 0.75 | 1.5 | 1 | 1.25 |
| $P_2O_5/ZrO_2$ | 1.75 | 1.33 | 1.33 | 4 | 2 | 1.33 |

(continued)

| Example | 19# | 20# | 21# | 22# | 23# | 24# |
|---|---|---|---|---|---|---|
| $(TiO_2+ZnO)/Al_2O$ | 0.64 | 0.91 | 0.77 | 0.7 | 0.8 | 0.6 |
| $(Al_2O_3+Li_2O)/P_2O_5$ | 6.86 | 12.5 | 12.5 | 14 | 28 | 15 |
| $(Li_2O+MgO)/TiO_2$ | 1.33 | 1.67 | 1.25 | 2.25 | 1.33 | 1.75 |
| $(K_2O+Na_2O)/ZnO$ | 0.27 | 0 | 0 | 0 | 0 | 0 |
| $(SiO_2+Na_2O)/ZnO$ | 4.73 | 2.88 | 3.69 | 4.43 | 2.88 | 4.36 |
| $Al_2O_3/(MgO+TiO_2)$ | 4.4 | 4.4 | 3.67 | 3.14 | 6.25 | 4.17 |
| $P_2O_5+ZrO_2$ | 5.5 | 3.5 | 3.5 | 2.5 | 1.5 | 3.5 |
| Crystalline phase content (%) | 35.1 | 39.5 | 37.3 | 34 | 42 | 35.1 |
| Type of crystalline phase | $ZnAl_2O_4$ | $ZnAl_2O_4$ | $ZnAl_2O_4$ | Quartz solid solution, $ZnAl_2O_4$ | $ZnAl_2O_4$ | $ZnAl_2O_4$ |
| Crystal grain size (nm) | 36 | 32 | 20 | 45 | 39 | 18 |
| Surface stress (Mpa) | 207 | 293 | 297 | 385 | 237 | 346 |
| Depth of ion exchange layer ($\mu$m) | 98 | 83 | 106 | 121 | 88 | 124 |
| Ball drop test height (mm) | 1500 | 1600 | 1600 | 1500 | 1700 | 1500 |
| Drop resistance (mm) | 1500 | 1600 | 1800 | 2000 | 1800 | 2000 |
| Fracture toughness (Mpa•m$^{1/2}$) | 1.3 | 1.1 | 1.4 | 1.6 | 1.2 | 1.6 |
| Four-point bending strength (Mpa) | 513 | 736 | 746 | 960 | 606 | 890 |
| Compressive strength (N) | 472 | 492 | 492 | 469 | 543 | 493 |
| Vickers hardness (Kgf/mm$^2$) | 703 | 713 | 709 | 694 | 715 | 708 |
| Haze (%) | 0.12 | 0.17 | 0.13 | 0.21 | 0.24 | 0.12 |
| \|B\| value | 0.8 | 0.5 | 0.7 | 0.3 | 0.5 | 0.4 |
| Average light transmittance in wavelength from 400 nm to 800 nm (%) | 89.8 | 89.7 | 90.0 | 89.5 | 89.5 | 90.2 |
| Light transmittance at wavelength of 550 nm (%) | 89.8 | 89.7 | 90.1 | 89.3 | 89.3 | 90.3 |

## Claims

1. A microcrystalline glass article having a spinel crystalline phase, comprising following components by weight percentage: $SiO_2$: 40% to 55%, $Al_2O_3+ZnO$: 26% to 45%, $Li_2O$: 0.1% to 6%, MgO: 0.1% to 6%, and $TiO_2$: 0.5% to 7%, wherein $Li_2O/TiO_2$ is in a range from 0.2 to 4.5.

2. The microcrystalline glass article having the spinel crystalline phase according to claim 1, further comprising following components by weight percentage: $P_2O_5+ZrO_2$: 0 to 8%; and/or $Na_2O$: 0 to 6%; and/or $B_2O_3$: 0 to 4%; and/or $K_2O$: 0 to 3%; and/or $CaO+BaO+SrO$: 0 to 5%; and/or $Y_2O_3$: 0 to 6%; and/or a clarifying agent: 0 to 2%.

3. A microcrystalline glass article having a spinel crystalline phase, comprising following components: $SiO_2$, $Al_2O_3$, $Li_2O$, ZnO, and $TiO_2$, wherein a light transmittance of the microcrystalline glass article with a thickness equal to or less than 1 mm is equal to or greater than 87.0% at a wavelength of 550 nm.

4. The microcrystalline glass article having the spinel crystalline phase according to claim 3, comprising following components by weight percentage: $SiO_2$: 40% to 55%; and/or $Al_2O_3+ZnO$: 26% to 45%; and/or $Li_2O$: 0.1% to 6%;

and/or MgO: 0.1% to 6%; and/or $TiO_2$: 0.5% to 7%; and/or $P_2O_5+ZrO_2$: 0 to 8%; and/or $Na_2O$: 0 to 6%; and/or $B_2O_3$: 0 to 4%; and/or $K_2O$: 0 to 3%; and/or CaO+BaO+SrO: 0 to 5%; and/or $Y_2O_3$: 0 to 6%; and/or a clarifying agent: 0 to 2%.

5. The microcrystalline glass article having the spinel crystalline phase according to any one of claims 1 to 4, wherein the components by weight percentage satisfy one or more of following ten conditions:

> 1) $Li_2O/TiO_2$ is in a range from 0.5 to 3.5, preferably $Li_2O/TiO_2$ is in a range from 0.7 to 2.5, more preferably $Li_2O/TiO_2$ is in a range from 0.75 to 1.5;
> 2) $Al_2O_3/ZnO$ is in a range from 1.0 to 3.0, preferably $Al_2O_3/ZnO$ is in a range from 1.25 to 2.5, more preferably $Al_2O_3/ZnO$ is in a range from 1.5 to 2.3;
> 3) $SiO_2/Al_2O_3$ is in a range from 1.5 to 3.2, preferably $SiO_2/Al_2O_3$ is in a range from 1.8 to 2.8, more preferably $SiO_2/Al_2O_3$ is in a range from 2.0 to 2.5;
> 4) $(TiO_2+ZnO)/Al_2O_3$ is in a range from 0.4 to 1.5, preferably $(TiO_2+ZnO)/Al_2O_3$ is in a range from 0.6 to 1.0, more preferably $(TiO_2+ZnO)/Al_2O_3$ is in a range from 0.6 to 0.9;
> 5) $(Li_2O+MgO)/TiO_2$ is in a range from 0.3 to 8.0, preferably $(Li_2O+MgO)/TiO_2$ is in a range from 1.0 to 3.0, more preferably $(Li_2O+MgO)/TiO_2$ is in a range from 1.2 to 2.5;
> 6) $Al_2O_3/(MgO+TiO_2)$ is in a range from 1.3 to 10.0, preferably $Al_2O_3/(MgO+TiO_2)$ is in a range from 2.5 to 6.5, more preferably $Al_2O_3/(MgO+TiO_2)$ is in a range from 3.0 to 5.5;
> 7) $(Al_2O_3+Li_2O)/P_2O_5$ is in a range from 5.0 to 45.0, preferably $(Al_2O_3+Li_2O)/P_2O_5$ is in a range from 8.0 to 30.0, more preferably $(Al_2O_3+Li_2O)/P_2O_5$ is in a range from 10.0 to 25.0;
> 8) $P_2O_5/ZrO_2$ is in a range from 0.1 to 5.0, preferably $P_2O_5/ZrO_2$ is in a range from 0.5 to 2.0, more preferably $P_2O_5/ZrO_2$ is in a range from 0.6 to 1.5;
> 9) $(SiO_2+Na_2O)/ZnO$ is in a range from 2.2 to 6.2, preferably $(SiO_2+Na_2O)/ZnO$ is in a range from 2.8 to 5.5, more preferably $(SiO_2+Na_2O)/ZnO$ is in a range from 3.0 to 5.0;
> 10) $(Na_2O+K_2O)/ZnO$ is equal to or less than 0.8, preferably $(Na_2O+K_2O)/ZnO$ is equal to or less than 0.4, more preferably $(Na_2O+K_2O)/ZnO$ is equal to or less than 0.2.

6. The microcrystalline glass article having the spinel crystalline phase according to any one of claims 1 to 4, comprising following components by weight percentage: $SiO_2$: 45% to 53%, preferably $SiO_2$: 48% to 52%; and/or $Al_2O_3+ZnO$: 30% to 42%, preferably $Al_2O_3+ZnO$: 35% to 40%; and/or $Li_2O$: 1% to 5%, preferably $Li_2O$: 2% to 4%; and/or MgO: 1% to 5%, preferably MgO: 2% to 4%; and/or $TiO_2$: 1% to 6%, preferably $TiO_2$: 2% to 5%; and/or $P_2O_5+ZrO_2$: 0.1% to 7%, preferably $P_2O_5+ZrO_2$: 0.5% to 5%; and/or $Na_2O$: 0 to 4%, preferably $Na_2O$: 0 to 2%; and/or $B_2O_3$: 0 to 2%, preferably $B_2O_3$: 0 to 1%; and/or $K_2O$: 0 to 2%, preferably $K_2O$: 0 to 1%; and/or CaO+BaO+SrO: 0 to 4%, preferably CaO+BaO+SrO: 0 to 2%; and/or $Y_2O_3$: 0 to 4%, preferably $Y_2O_3$: 0 to 2%; and/or the clarifying agent: 0 to 1%, preferably the clarifying agent: 0 to 0.5%.

7. The microcrystalline glass article having the spinel crystalline phase according to any one of claims 1 to 4, comprising following components by weight percentage: $Al_2O_3$: 15% to 30%, preferably $Al_2O_3$: 18% to 25%; and/or ZnO: 9% to 20%, preferably ZnO: 12% to 16%; and/or $P_2O_5$: 0.5% to 4%, preferably $P_2O_5$: 1% to 3%; and/or $ZrO_2$: 0.5% to 4%, preferably $ZrO_2$: 1% to 3%.

8. The microcrystalline glass article having the spinel crystalline phase according to any one of claims 1 to 4, wherein a weight percentage of the spinel crystalline phase in the microcrystalline glass article is in a range from 20% to 60%, preferably from 25% to 45%, more preferably from 30% to 45%.

9. The microcrystalline glass article having the spinel crystalline phase according to any one of claims 1 to 4, comprising a quartz crystalline phase, wherein a weight percentage of the quartz crystalline phase in the microcrystalline glass article is equal to or less than 20%, preferably equal to or less than 10%, more preferably equal to or less than 5%.

10. The microcrystalline glass article having the spinel crystalline phase according to any one of claims 1 to 4, further comprising following components by weight percentage: $La_2O_3+Gd_2O_3+Yb_2O_3+Nb_2O_5+WO_3+Bi_2O_3+Ta_2O_5+TeO_2$: 0 to 5%, preferably the composition excluding $La_2O_3$, and/or excluding $Gd_2O_3$, and/or excluding $Yb_2O_3$, and/or excluding $Nb_2O_5$, and/or excluding $WO_3$, and/or excluding $Bi_2O_3$, and/or $Ta_2O_5$, and/or excluding $TeO_2$.

11. The microcrystalline glass article having the spinel crystalline phase according to any one of claims 1 to 4, wherein a crystal grain size of the microcrystalline glass article is equal to or less than 60 nm, preferably in a range from 10 nm to 30 nm; and/or a depth of an ion exchange layer of the microcrystalline glass article is equal to or greater than 75 μm, preferably in a range from 100 μm to 125 μm; and/or a surface stress of the microcrystalline glass article is equal to or greater than 200 MPa, preferably in a range from 300 MPa to 400 MPa; and/or a ball drop test height of the microcrystalline glass article is equal to or greater than 1000 mm, preferably equal to or greater than 1500 mm; and/or a drop resistance of the microcrystalline glass article is equal to or greater than 1200 mm, preferably equal to or greater than 1400 mm; and/or a fracture toughness of the microcrystalline glass article is equal to or greater than 1.0 $MPa \cdot m^{1/2}$, preferably in a range from 1.2 $MPa \cdot m^{1/2}$ to 1.6 $MPa \cdot m^{1/2}$; and/or a four-point bending strength of the microcrystalline glass article is equal to or greater than 500 MPa, preferably in a range from 700 MPa to 1000 MPa; and/or a compressive strength of the microcrystalline glass article is equal to or greater than 400 N, preferably in a range from 450 N to 550 N; and/or a Vickers hardness of the microcrystalline glass article is equal to or greater than 650 $kgf/mm^2$, preferably in a range from 680 $kgf/mm^2$ to 750 $kgf/mm^2$.

12. The microcrystalline glass article having the spinel crystalline phase according to any one of claims 1 to 4, wherein a haze of the microcrystalline glass article with a thickness equal to or less than 1 mm is equal to or less than 0.3%, preferably in a range from 0.05% to 0.2%; and/or an average light transmittance of the microcrystalline glass article with a thickness equal to or less than 1 mm in a wavelength range from 400 nm to 800 nm is equal to or greater than 87.0%, preferably equal to or greater than 89.5%; and/or a light transmittance of the microcrystalline glass article with a thickness equal to or less than 1 mm at a wavelength of 550 nm is equal to or greater than 87.0%, preferably equal to or greater than 89.0%; and/or an average |B| value of the microcrystalline glass article with a thickness equal to or less than 1 mm for light in a wavelength range from 400 nm to 800 nm is equal to or less than 1.0, preferably in a range from 0.3 to 0.6.

13. The microcrystalline glass article having the spinel crystalline phase according to claim 12, wherein the thickness of the microcrystalline glass article is in a range from 0.2 mm to 1 mm, preferably 0.55 mm, 0.6 mm, 0.68 mm, 0.7 mm, or 0.75 mm.

14. The microcrystalline glass article having the spinel crystalline phase according to any one of claims 1 to 4, further comprising following components by weight percentage: NiO: 0 to 4%; and/or $Ni_2O_3$: 0 to 4%; and/or CoO: 0 to 2%; and/or $Co_2O_3$: 0 to 2%; and/or $Fe_2O_3$: 0 to 7%; and/or $MnO_2$: 0 to 4%; and/or $Er_2O_3$: 0 to 8%; and/or $Nd_2O_3$: 0 to 8%; and/or $Cu_2O$: 0 to 4%; and/or $Pr_2O_3$: 0 to 8%; and/or $CeO_2$: 0 to 4%.

15. A microcrystalline glass having the spinel crystalline phase, comprising following components by weight percentage: $SiO_2$: 40% to 55%, $Al_2O_3$+ZnO: 26% to 45%, $Li_2O$: 0.1% to 6%, MgO: 0.1% to 6%, and $TiO_2$: 0.5% to 7%, wherein $Li_2O/TiO_2$ is in a range from 0.2 to 4.5.

16. The microcrystalline glass having the spinel crystalline phase according to claim 15, further following comprising components by weight percentage: $P_2O_5$+$ZrO_2$: 0 to 8%; and/or $Na_2O$: 0 to 6%; and/or $B_2O_3$: 0 to 4%; and/or $K_2O$: 0 to 3%; and/or CaO+BaO+SrO: 0 to 5%; and/or $Y_2O_3$: 0 to 6%; and/or a clarifying agent: 0 to 2%.

17. A microcrystalline glass having the spinel crystalline phase, comprising following components: $SiO_2$, $Al_2O_3$, $Li_2O$, ZnO, and $TiO_2$, wherein a light transmittance of the microcrystalline glass with a thickness equal to or less than 1 mm at a wavelength of 550 nm is equal to or greater than 87.0%.

18. The microcrystalline glass having the spinel crystalline phase according to claim 17, comprising following components by weight percentage: $SiO_2$: 40% to 55%; and/or $Al_2O_3$+ZnO: 26% to 45%; and/or $Li_2O$: 0.1% to 6%; and/or MgO: 0.1% to 6%; and/or $TiO_2$: 0.5% to 7%; and/or $P_2O_5$+$ZrO_2$: 0 to 8%; and/or $Na_2O$: 0 to 6%; and/or $B_2O_3$: 0 to 4%; and/or $K_2O$: 0 to 3%; and/or CaO+BaO+SrO: 0 to 5%; and/or $Y_2O_3$: 0 to 6%; and/or a clarifying agent: 0 to 2%.

19. The microcrystalline glass having the spinel crystalline phase according to any one of claims 15 to 18, wherein the components by weight percentage satisfy one or more of following ten conditions:

1) $Li_2O/TiO_2$ is in a range from 0.5 to 3.5, preferably $Li_2O/TiO_2$ is in a range from 0.7 to 2.5, more preferably $Li_2O/TiO_2$ is in a range from 0.75 to 1.5;
2) $Al_2O_3$/ZnO is in a range from 1.0 to 3.0, preferably $Al_2O_3$/ZnO is in a range from 1.25 to 2.5, more preferably $Al_2O_3$/ZnO is in a range from 1.5 to 2.3;
3) $SiO_2/Al_2O_3$ is in a range from 1.5 to 3.2, preferably $SiO_2/Al_2O_3$ is in a range from 1.8 to 2.8, more preferably $SiO_2/Al_2O_3$ is in a range from 2.0 to 2.5;
4) $(TiO_2$+ZnO$)/Al_2O_3$ is in a range from 0.4 to 1.5, preferably $(TiO_2$+ZnO$)/Al_2O_3$ is in a range from 0.6 to 1.0, more preferably $(TiO_2$+ZnO$)/Al_2O_3$ is in a range from 0.6 to 0.9;
5) $(Li_2O$+MgO$)/TiO_2$ is in a range from 0.3 to 8.0, preferably $(Li_2O$+MgO$)/TiO_2$ is in a range from 1.0 to 3.0, more

preferably $(Li_2O+MgO)/TiO_2$ is in a range from 1.2 to 2.5;

6) $Al_2O_3/(MgO+TiO_2)$ is in a range from 1.3 to 10.0, preferably $Al_2O_3/(MgO+TiO_2)$ is in a range from 2.5 to 6.5, more preferably $Al_2O_3/(MgO+TiO_2)$ is in a range from 3.0 to 5.5;

7) $(Al_2O_3+Li_2O)/P_2O_5$ is in a range from 5.0 to 45.0, preferably $(Al_2O_3+Li_2O)/P_2O_5$ is in a range from 8.0 to 30.0, more preferably $(Al_2O_3+Li_2O)/P_2O_5$ is in a range from 10.0 to 25.0;

8) $P_2O_5/ZrO_2$ is in a range from 0.1 to 5.0, preferably $P_2O_5/ZrO_2$ is in a range from 0.5 to 2.0, more preferably $P_2O_5/ZrO_2$ is in a range from 0.6 to 1.5;

9) $(SiO_2+Na_2O)/ZnO$ is in a range from 2.2 to 6.2, preferably $(SiO_2+Na_2O)/ZnO$ is in a range from 2.8 to 5.5, more preferably $(SiO_2+Na_2O)/ZnO$ is in a range from 3.0 to 5.0;

10) $(Na_2O+K_2O)/ZnO$ is equal to or less than 0.8, preferably $(Na_2O+K_2O)/ZnO$ is equal to or less than 0.4, more preferably $(Na_2O+K_2O)/ZnO$ is equal to or less than 0.2.

20. The microcrystalline glass having the spinel crystalline phase according to any one of claims 15 to 18, comprising following components by weight percentage: $SiO_2$: 45% to 53%, preferably $SiO_2$: 48% to 52%; and/or $Al_2O_3+ZnO$: 30% to 42%, preferably $Al_2O_3+ZnO$: 35% to 40%; and/or $Li_2O$: 1% to 5%, preferably $Li_2O$: 2% to 4%; and/or MgO: 1% to 5%, preferably MgO: 2% to 4%; and/or $TiO_2$: 1% to 6%, preferably $TiO_2$: 2% to 5%; and/or $P_2O_5+ZrO_2$: 0.1% to 7%, preferably $P_2O_5+ZrO_2$: 0.5% to 5%; and/or $Na_2O$: 0 to 4%, preferably $Na_2O$: 0 to 2%; and/or $B_2O_3$: 0 to 2%, preferably $B_2O_3$: 0 to 1%; and/or $K_2O$: 0 to 2%, preferably $K_2O$: 0 to 1%; and/or $CaO+BaO+SrO$: 0 to 4%, preferably $CaO+BaO+SrO$: 0 to 2%; and/or $Y_2O_3$: 0 to 4%, preferably $Y_2O_3$: 0 to 2%; and/or the clarifying agent: 0 to 1%, preferably the clarifying agent: 0 to 0.5%.

21. The microcrystalline glass having the spinel crystalline phase according to any one of claims 15 to 18, comprising following components by weight percentage: $Al_2O_3$: 15% to 30%, preferably $Al_2O_3$: 18% to 25%; and/or ZnO: 9% to 20%, preferably ZnO: 12% to 16%; and/or $P_2O_5$: 0.5% to 4%, preferably $P_2O_5$: 1% to 3%; and/or $ZrO_2$: 0.5% to 4%, preferably $ZrO_2$: 1% to 3%.

22. The microcrystalline glass having the spinel crystalline phase according to any one of claims 15 to 18, wherein a weight percentage of the spinel crystalline phase in the microcrystalline glass is in a range from 20% to 60%, preferably from 25% to 45%, more preferably from 30% to 45%.

23. The microcrystalline glass having the spinel crystalline phase according to any one of claims 15 to 18, comprising a quartz crystalline phase, wherein a weight percentage of the quartz crystalline phase in the microcrystalline glass is equal to or less than 20%, preferably equal to or less than 10%, more preferably equal to or less than 5%.

24. The microcrystalline glass having the spinel crystalline phase according to any one of claims 15 to 18, comprising following components by weight percentage: $La_2O_3+Gd_2O_3+Yb_2O_3+Nb_2O_5+WO_3+Bi_2O_3+Ta_2O_5+TeO_2$: 0 to 5%, preferably the composition excluding $La_2O_3$, and/or excluding $Gd_2O_3$, and/or excluding $Yb_2O_3$, and/or excluding $Nb_2O_5$, and/or excluding $WO_3$, and/or excluding $Bi_2O_3$, and/or excluding $Ta_2O_5$, and/or excluding $TeO_2$.

25. The microcrystalline glass having the spinel crystalline phase according to any one of claims 15 to 18, wherein a crystal grain size of the microcrystalline glass is equal to or less than 60 nm, preferably in a range from 10 nm to 30 nm; and/or a Yong's modulus of the microcrystalline glass is in a range from 80 GPa to 110 GPa, preferably in a range from 90 GPa to 105 Gpa; and/or a Vickers hardness of the microcrystalline glass is equal to or greater than 550 kgf/mm$^2$, preferably in a range from 600 kgf/mm$^2$ to 650 kgf/mm$^2$.

26. The microcrystalline glass having the spinel crystalline phase according to any one of claims 15 to 18, wherein a haze of the microcrystalline glass with a thickness equal to or less than 1 mm is equal to or less than 0.3%, preferably in a range from 0.05% to 0.2%; and/or an average light transmittance of the microcrystalline glass with a thickness equal to or less than 1 mm in a wavelength range from 400 nm to 800 nm is equal to or greater than 87.0%, preferably equal to or greater than 89.5%; and/or a light transmittance of the microcrystalline glass with a thickness equal to or less than 1 mm at a wavelength of 550 nm is equal to or greater than 87.0%, preferably equal to or greater than 89.0%; and/or an average |B| value of the microcrystalline glass with a thickness equal to or less than 1 mm for light in a wavelength range from 400 nm to 800 nm is equal to or less than 1.0, preferably in a range from 0.3 to 0.6.

27. The microcrystalline glass having the spinel crystalline phase according to claim 26, wherein the thickness of the microcrystalline glass is in a range from 0.2 mm to 1 mm, preferably 0.55 mm, 0.6 mm, 0.68 mm, 0.7 mm, or 0.75 mm.

28. The microcrystalline glass having the spinel crystalline phase according to any one of claims 15 to 18, further comprising following components by weight percentage: NiO: 0 to 4%; and/or $Ni_2O_3$: 0 to 4%; and/or CoO: 0 to 2%; and/or $Co_2O_3$: 0 to 2%; and/or $Fe_2O_3$: 0 to 7%; and/or $MnO_2$: 0 to 4%; and/or $Er_2O_3$: 0 to 8%; and/or $Nd_2O_3$: 0 to 8%; and/or $Cu_2O$: 0 to 4%; and/or $Pr_2O_3$: 0 to 8%; and/or $CeO_2$: 0 to 4%.

29. A glass cover plate, comprising the microcrystalline glass article having the spinel crystalline phase according to any one of claims 1 to 14, and/or the microcrystalline glass having the spinel crystalline phase according to any one of claims 15 to 28.

30. A glass element, comprising the microcrystalline glass article having the spinel crystalline phase according to any one of claims 1 to 14, and/or the microcrystalline glass having the spinel crystalline phase according to any one of claims 15 to 28.

31. An electronic device, comprising the microcrystalline glass article having the spinel crystalline phase according to any one of claims 1 to 14, and/or the microcrystalline glass having the spinel crystalline phase according to any one of claims 15 to 28, and/or the glass cover plate according to claim 29, and/or the glass element according to claim 30.

32. A display device, comprising the microcrystalline glass article having the spinel crystalline phase according to any one of claims 1 to 14, and/or the microcrystalline glass having the spinel crystalline phase according to any one of claims 15 to 28, and/or the glass cover plate according to claim 29, and/or the glass element according to claim 30.

33. A method for preparing the microcrystalline glass article having the spinel crystalline phase according to any one of claims 1 to 14, comprising following steps: forming a matrix glass, subjecting the matrix glass to a crystallization process to form a microcrystalline glass having a spinel crystalline phase, and subjecting the microcrystalline glass having the spinel crystalline phase to a chemical strengthening process, thereby achieving the microcrystalline glass article having the spinel crystalline phase.

34. The method according to claim 33, wherein forming the matrix glass comprises following steps:
mixing raw materials uniformly according to the proportions of the components to obtain a mixture, placing the mixture in a crucible, and melting in an electric furnace or a gas furnace at a temperature in a range from 1350 °C to 1550 °C, preferably from 1450 °C to 1550 °C, for a time period in a range from 5 hours to 24 hours, and then clarifying, homogenizing, forming, and annealing in sequence to obtain the matrix glass, wherein the clarifying is performed at a temperature greater than 1550 °C but less than or equal to 1650 °C, and the annealing is performed at a temperature in a range from 450 °C to 600 °C.

35. The method according to claim 33, wherein the crystallization process comprises following steps: heating to a preset crystallization temperature, then holding at the crystallization temperature for a time period, and then cooling, wherein the crystallization temperature is in a range from 600 °C to 800 °C, preferably from 650 °C to 750 °C, and the time period of holding at the crystallization temperature is in a range from 1 hour to 10 hours, preferably from 3 hours to 6 hours.

36. The method according to claim 33, wherein the crystallization process comprises following steps: performing a nucleation process at a first temperature, and then performing a crystal growth process at a second temperature, the first temperature is in a range from 600 °C to 700 °C, the second temperature is greater than 700 °C but less than or equal to 800 °C, a time period of holding at the first temperature is in a range from 1 hour to 6 hours, and a time period of holding at the second temperature is in a range from 2 hours to 5 hours.

37. The method according to claim 33, wherein the chemical strengthening process comprises: immersing the microcrystalline glass having the spinel crystalline phase in a molten Na salt bath at a temperature in a range from 350 °C to 470 °C, preferably from 400 °C to 460 °C, for a time period in a range from 1 hour to 36 hours, preferably from 2 hours to 15 hours; and/or immersing the microcrystalline glass having the spinel crystalline phase in a mixed molten salt bath of K salt and Na salt at a temperature in a range from 360 °C to 450 °C for a time period in a range from 1 hour to 36 hours, preferably from 2 hours to 24 hours.

38. A method for preparing the microcrystalline glass having the spinel crystalline phase according to any one of claims 15 to 28, comprising following steps: forming a matrix glass, and subjecting the matrix glass to a crystallization process to form the microcrystalline glass having the spinel crystalline phase.

39. The method according to claim 38, wherein forming the matrix glass comprises following steps:

mixing raw materials uniformly according to the proportions of the components to obtain a mixture, placing the mixture in a crucible, and melting in an electric furnace or a gas furnace at a temperature in a range from 1350 °C to 1550 °C, preferably from 1450 °C to 1550 °C, for a time period in a range from 5 hours to 24 hours, and then clarifying, homogenizing, forming, and annealing in sequence to obtain the matrix glass, wherein the clarifying is performed at a temperature greater than 1550 °C but less than or equal to 1650 °C, and the annealing is performed at a temperature in a range from 450 °C to 600 °C.

40. The method according to claim 38, wherein the crystallization process comprises following steps: heating to a preset crystallization temperature, then holding at the crystallization temperature for a time period, and then cooling, wherein the crystallization temperature is in a range from 600 °C to 800 °C, preferably from 650 °C to 750°C, and the time period of holding at the crystallization temperature is in a range from 1 hour to 10 hours, preferably from 3 hours to 6 hours.

41. The method according to claim 38, wherein the crystallization process comprises following steps: performing a nucleation process at a first temperature, and then performing a crystal growth process at a second temperature, the first temperature is in a range from 600 °C to 700 °C, the second temperature is greater than 700 °C but less than or equal to 800 °C, a time period of holding at the first temperature is in a range from 1 hour to 6 hours, and a time period of holding at the second temperature is in a range from 2 hours to 5 hours.

## INTERNATIONAL SEARCH REPORT

| International application No. |
| --- |
| **PCT/CN2024/081696** |

| A. | CLASSIFICATION OF SUBJECT MATTER |
| --- | --- |

C03C10/02(2006.01)i

According to International Patent Classification (IPC) or to both national classification and IPC

| B. | FIELDS SEARCHED |
| --- | --- |

Minimum documentation searched (classification system followed by classification symbols)

IPC: C03C

Documentation searched other than minimum documentation to the extent that such documents are included in the fields searched

Electronic data base consulted during the international search (name of data base and, where practicable, search terms used)

ENTXT, EXTXTC, VEN, CNTXT, CNABS, ISI, CNKI: 玻璃, 微晶, 陶瓷, 尖晶石, 氧化硅, 氧化铝, 氧化锂, 氧化镁, 氧化锌, 五氧化二磷, 氧化钛, 氧化锆, 离子交换, 强化, 钢化, glass, crystallite, ceramic, spinel, silicon oxide, aluminum oxide, lithium oxide, magnesium oxide, zinc oxide, phosphorus pentoxide, titanium oxide, zirconium oxide, ion exchanged, strengthened, tempered, harden, toughen, enhance, $SiO_2$, $Al_2O_3$, $Li_2O$, MgO, ZnO, $P_2O_5$, $TiO_2$, $ZrO_2$

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 101905952 A (OHARA INC.) 08 December 2010 (2010-12-08) claims 1-15, and description, paragraphs 0100-0125, 0132-0133, and 0152-0163 | 1-41 |
| A | CN 111807705 A (CDGM GLASS CO., LTD.) 23 October 2020 (2020-10-23) entire document | 1-41 |
| A | CN 112645609 A (CHONGQING XINJING SPECIAL GLASS CO., LTD.) 13 April 2021 (2021-04-13) entire document | 1-41 |
| A | CN 115427365 A (NIPPON ELECTRIC GLASS CO., LTD.) 02 December 2022 (2022-12-02) entire document | 1-41 |
| A | US 5476821 A (CORNING INC.) 19 December 1995 (1995-12-19) entire document | 1-41 |
| PX | CN 116375345 A (CDGM GLASS CO., LTD.) 04 July 2023 (2023-07-04) claims 1-61 | 1-41 |

☑ Further documents are listed in the continuation of Box C.  ☑ See patent family annex.

| * | Special categories of cited documents: | |
| --- | --- | --- |
| "A" | document defining the general state of the art which is not considered to be of particular relevance | "T" later document published after the international filing date or priority date and not in conflict with the application but cited to understand the principle or theory underlying the invention |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
| --- | --- |
| **13 June 2024** | **15 June 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2024/081696** |

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 116621455 A (CDGM GLASS CO., LTD.) 22 August 2023 (2023-08-22)<br>      claims 1-49 | 1-41 |
| X | CN 114907014 A (CDGM GLASS CO., LTD.) 16 August 2022 (2022-08-16)<br>      claims 1-80 | 1-41 |
| X | CN 115286251 A (QINGYUAN CSG ENERGY SAVING NEW MATERIAL CO., LTD. et al.) 04 November 2022 (2022-11-04)<br>      description, paragraphs 40, 48, 58-75, and 78-84 | 1-41 |

Form PCT/ISA/210 (second sheet) (July 2022)

## INTERNATIONAL SEARCH REPORT
### Information on patent family members

International application No.

**PCT/CN2024/081696**

| Patent document cited in search report | | | Publication date (day/month/year) | Patent family member(s) | | | Publication date (day/month/year) |
|---|---|---|---|---|---|---|---|
| CN | 101905952 | A | 08 December 2010 | EP | 2263979 | A1 | 22 December 2010 |
| | | | | US | 2013011695 | A1 | 10 January 2013 |
| | | | | US | 8852764 | B2 | 07 October 2014 |
| | | | | US | 2011135964 | A1 | 09 June 2011 |
| | | | | US | 8283060 | B2 | 09 October 2012 |
| | | | | JP | 2011207626 | A | 20 October 2011 |
| | | | | JP | 4815002 | B2 | 16 November 2011 |
| CN | 111807705 | A | 23 October 2020 | None | | | |
| CN | 112645609 | A | 13 April 2021 | None | | | |
| CN | 115427365 | A | 02 December 2022 | WO | 2021215307 | A1 | 28 October 2021 |
| | | | | US | 2023357070 | A1 | 09 November 2023 |
| | | | | JP | 2021172547 | A | 01 November 2021 |
| | | | | KR | 20230008017 | A | 13 January 2023 |
| US | 5476821 | A | 19 December 1995 | KR | 960017591 | A | 17 June 1996 |
| | | | | EP | 0710627 | A1 | 08 May 1996 |
| | | | | EP | 0710627 | B1 | 25 March 1998 |
| | | | | JPH | 0977531 | A | 25 March 1997 |
| | | | | JP | 2954865 | B2 | 27 September 1999 |
| | | | | DE | 69501869 | D1 | 30 April 1998 |
| | | | | DE | 69501869 | T2 | 23 July 1998 |
| CN | 116375345 | A | 04 July 2023 | None | | | |
| CN | 116621455 | A | 22 August 2023 | None | | | |
| CN | 114907014 | A | 16 August 2022 | None | | | |
| CN | 115286251 | A | 04 November 2022 | None | | | |

Form PCT/ISA/210 (patent family annex) (July 2022)